(19) Europäisches Patentamt
European Patent Office
Office européen des brevets

(11) **EP 4 618 431 A1**

(12) **EUROPEAN PATENT APPLICATION**

(43) Date of publication:
**17.09.2025 Bulletin 2025/38**

(21) Application number: **25162689.1**

(22) Date of filing: **10.03.2025**

(51) International Patent Classification (IPC):
**H04B 3/54** (2006.01)

(52) Cooperative Patent Classification (CPC):
**H04B 3/54;** H04B 3/58; H04B 2203/5479

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.03.2024 JP 2024038180**

(71) Applicant: **MegaChips Corporation
Osaka 532-0003 (JP)**

(72) Inventors:
• **EGUCHI, Akihiko**
  **Yodogawa-ku, Osaka-shi, 532-0003 (JP)**
• **MATSUTANI, Takashi**
  **Yodogawa-ku, Osaka-shi, 532-0003 (JP)**
• **YASUI, Motoaki**
  **Yodogawa-ku, Osaka-shi, 532-0003 (JP)**

(74) Representative: **Winter, Brandl - Partnerschaft
mbB
Alois-Steinecker-Straße 22
85354 Freising (DE)**

(54) **FIRST COMMUNICATION APPARATUS, SECOND COMMUNICATION APPARATUS, AND COMMUNICATION SYSTEM**

(57)    A first communication apparatus is configured to transmit a first packet at a first transmission rate, and includes a first interface, a generation unit, and a second interface. The first interface is configured to receive a second packet transmitted at a second transmission rate lower than the first transmission rate. The generation unit is configured to, each time the first interface receives a second bit group having number of bits smaller than the number of bits of a data main body that can be included in the first packet out of a first bit group to be transmitted included in the second packet, sequentially generate the first packet including the data main body including the second bit group. The second interface is configured to, each time the generation unit generates the first packet, sequentially transmit the first packet.

FIG. 2

**Description**

BACKGROUND OF THE INVENTION

Field of the Invention

The present disclosure relates to communication technology.

Description of the Background Art

Japanese Patent Application Laid-Open No. 2007-150621 discloses technology related to power line communication.

SUMMARY

An aspect of a first communication apparatus is configured to transmit a first packet at a first transmission rate, and includes a first interface, a generation unit, and a second interface. The first interface is configured to receive a second packet transmitted at a second transmission rate lower than the first transmission rate. The generation unit is configured to, each time the first interface receives a second bit group having number of bits smaller than the number of bits of a data main body that can be included in the first packet out of a first bit group to be transmitted included in the second packet, sequentially generate the first packet including the data main body including the second bit group. The second interface is configured to, each time the generation unit generates the first packet, sequentially transmit the first packet.

An aspect of a second communication apparatus includes a third interface, a restoration unit, and a fourth interface. The third interface is configured to receive the first packet sequentially transmitted by the first communication apparatus. The restoration unit is configured to generate a restored second packet obtained by restoring the second packet, based on the first packet sequentially received by the third interface. The fourth interface is configured to transmit the restored second packet.

An aspect of a communication system includes the first communication apparatus and the second communication apparatus.

BRIEF DESCRIPTION OF THE DRAWINGS

FIG. 1 is a schematic diagram illustrating an example of a configuration of a processing system.
FIG. 2 is a schematic diagram illustrating an example of a configuration of a communication system.
FIG. 3 is a schematic diagram illustrating an example of a configuration of a first packet.
FIG. 4 is a schematic diagram illustrating an example of a configuration of a second packet.
FIG. 5 is a schematic diagram illustrating an example of a configuration of a generation unit.
FIG. 6 is a schematic diagram illustrating an example of a configuration of a packet generation unit.
FIG. 7 is a schematic diagram illustrating an example of a configuration of a data main body.
FIG. 8 is a schematic diagram illustrating an example of a configuration of a restoration unit.
FIG. 9 is a schematic diagram illustrating an example of a configuration of a data main body acquisition unit.
FIG. 10 is a schematic diagram illustrating an example of operation of the communication system.
FIG. 11 is a schematic diagram illustrating an example of operation of the communication system.
FIG. 12 is a schematic diagram illustrating an example of operation of the communication system.
FIG. 13 is a schematic diagram for illustrating an example of operation of the generation unit.
FIG. 14 is a schematic diagram for illustrating an example of operation of the generation unit.
FIG. 15 is a schematic diagram for illustrating an example of operation of the generation unit.
FIG. 16 is a schematic diagram for illustrating an example of operation of the generation unit.

DESCRIPTION OF THE PREFERRED EMBODIMENTS

<Overview of Example of Processing System>

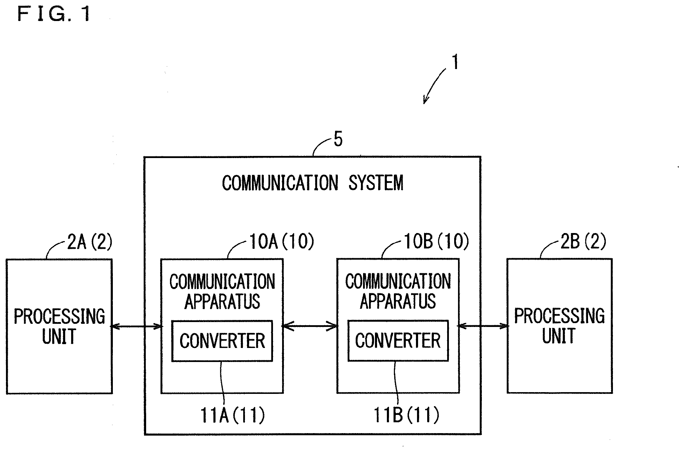

FIG. 1 is a schematic diagram illustrating an example of a processing system 1. As illustrated in FIG. 1, the processing system 1 includes a processing unit 2A, a processing unit 2B, and a communication system 5 that can communicate with the processing unit 2A and the processing unit 2B, for example.

The processing unit 2A and the processing unit 2B are located at places distant from each other, for example. The processing unit 2A and the processing unit 2B can communicate with each other via the communication system 5. It can also be said that each of the processing unit 2A and the processing unit 2B is a communication unit or a communication apparatus, for example. The processing unit 2A and the processing unit 2B can communicate with each other by using a command and response method, for example. The processing unit 2A can transmit command data indicating a command to the processing unit 2B via the communication system 5, for example. The processing unit 2B can transmit response data indicating a response to the processing unit 2A via the communication system 5, in response to reception of the command data from the processing unit 2A. The communication system 5 functions as a bridge system that connects the processing unit 2A and the processing unit 2B to each other, for example.

The processing unit 2A may be a control apparatus that controls a power supply unit (which can also be referred to as a power supply apparatus) that supplies power to a load located near the processing unit 2B, for example. In this case, the processing unit 2B may be a sensor apparatus that detects a state of the load. For example, when the load is a motor, the sensor apparatus as the processing unit 2B may include an encoder that detects a rotation angle of the motor. In this case, the processing unit 2A may transmit command data for requesting detection results in the encoder, and the processing unit 2B may transmit response data indicating the detection results in the encoder. By controlling the power supply unit based on the detection results in the encoder indicated by the received response data, the processing unit 2A may control the motor as the load via the power supply unit. For example, when the load is a three-phase motor, the power supply unit may include an inverter circuit that supplies three-phase power to the three-phase motor. It can also be said that each of the processing unit 2A and the processing unit 2B is a processing apparatus, for example.

The communication system 5 includes a communication apparatus 10A and a communication apparatus 10B that are located at places distant from each other, for example. The communication apparatus 10A is located near the processing unit 2A and can communicate with the processing unit 2A, for example, and the communication apparatus 10B is located near the processing unit 2B and can communicate with the processing unit 2B, for example. The communication apparatus 10A and the communication apparatus 10B can communicate with each other.

The communication apparatus 10A receives the command data transmitted by the processing unit 2A, and transmits the received command data to the communication apparatus 10B. The communication apparatus 10B transmits the command data received from the communication apparatus 10A to the processing unit 2B. Consequently, the command data transmitted by the processing unit 2A is input to the processing unit 2B via the communication system 5.

The communication apparatus 10B receives the response data transmitted by the processing unit 2B, and transmits the received response data to the communication apparatus 10A. The communication apparatus 10A transmits the response data received from the communication apparatus 10B to the processing unit 2A. Consequently, the response data transmitted by the processing unit 2B is input to the processing unit 2A via the communication system 5.

In the following, when the communication apparatus 10A and the communication apparatus 10B need not be distinguished from each other, each of the communication apparatus 10A and the communication apparatus 10B is referred to as a communication apparatus 10. When the processing unit 2A and the processing unit 2B need not be distinguished from each other, each of the processing unit 2A and the processing unit 2B is referred to as a processing unit 2.

The communication apparatus 10A and the communication apparatus 10B can perform power line communication (PLC), for example. The communication apparatus 10A and the communication apparatus 10B are connected to each other with a power line, for example. The power line connecting the communication apparatus 10A and the communication apparatus 10B may be a power line that transmits the power supply output by the power supply unit controlled by the processing unit 2A to the load such as the motor.

The communication apparatus 10A and the communication apparatus 10B can exchange a first packet with each other. The first packet is a unit of transmission of data between the communication apparatus 10A and the communication apparatus 10B, and includes a plurality of bits. The communication apparatus 10A performs data communication with the communication apparatus 10B in the unit of the first packet. Each communication apparatus 10 transmits one first packet, and then transmits another first packet after a time interval. The first packet flows in a transmission path (for example, the power line) between the communication apparatus 10A and the communication apparatus 10B.

The communication apparatus 10 transmits the first packet at a first transmission rate. The first transmission rate may be 100 Mbps or higher, for example. For example, the first transmission rate may be 120 Mbps, or may be another value. "bps" is an abbreviation for "bits per second". The transmission rate may be referred to as a transfer rate or a bit rate, for example.

The processing unit 2A and the communication apparatus 10A can perform serial communication, for example. The processing unit 2B and the communication apparatus 10B can perform serial communication, for example. A communication method between the processing unit 2A and the communication apparatus 10A and a communication method between the processing unit 2B and the communication apparatus 10B are the same as each other, for example. The processing unit 2A and the communication apparatus 10A are connected to each other with a cable, for example. The processing unit 2B and the communication apparatus 10B are connected to each other with a cable, for example.

The processing unit 2A and the communication apparatus 10A can exchange a second packet with each other. The processing unit 2B and the communication apparatus 10B can exchange a second packet with each other. The second packet is a unit of transmission of data between the processing unit 2 and the communication apparatus 10, and includes a plurality of bits. The second packet has a configuration different from that of the first packet. The processing unit 2 performs data communication with the communication apparatus 10 in the unit of the second packet.

The processing unit 2A transmits the second packet including command data to the communication apparatus 10A, and the processing unit 2B transmits the second packet including response data to the communication apparatus 10B. Each processing unit 2 transmits one second packet, and then transmits another second packet after a time interval. The second packet flows in a transmission path (for example, a power line) between the processing unit 2 and the communication apparatus 10.

The processing unit 2 transmits the second packet at a second transmission rate lower than the first transmission rate. The second transmission rate may be one-tenth or less of the first transmission rate, or may be one-hundredth or less thereof. The second transmission rate may be 1 Mbps, for example, or may be another value.

In the following, the first packet may be referred to as a high-speed packet, and the second packet may be referred to as a low-speed packet. The first transmission rate may be referred to as a high-speed transmission rate, and the second transmission rate may be referred to as a low-speed transmission rate. A communication method using the high-speed packet may be referred to as a high-speed communication method. A communication method using the low-speed packet may be referred to as a low-speed communication method. In the present example, the PLC method is employed as the high-speed communication method, and the serial communication method is employed as the low-speed communication method.

The communication apparatus 10A and the communication apparatus 10B include the same configuration as each other, for example. The communication apparatus 10A includes a converter 11A, and the communication apparatus 10B includes a converter 11B. The converter 11A converts the low-speed packet received by the communication apparatus 10A into a plurality of high-speed packets, for example. The converter 11A converts the plurality of high-speed packets received by the communication apparatus 10A into a low-speed packet. Similarly, the converter 11B converts the low-speed packet received by the communication apparatus 10B into a plurality of high-speed packets, for example. The converter 11B converts the plurality of high-speed packets received by the communication apparatus 10B into a low-speed packet.

The converter 11A converts the low-speed packet including command data received by the communication apparatus 10A into a plurality of high-speed packets including the command data. Then, the communication apparatus 10A transmits the plurality of high-speed packets obtained in the converter 11A to the communication apparatus 10B. The converter 11B converts the plurality of high-speed packets including the command data received by the communication apparatus 10B into a low-speed packet including the command data. Then, the communication apparatus 10B transmits the low-speed packet obtained in the converter 11B to the processing unit 2B. It can also be said that the communication system 5 relays and transmits the low-speed packet transmitted by the processing unit 2A to the processing unit 2B.

The converter 11B converts the low-speed packet including response data received by the communication apparatus 10B into a plurality of high-speed packets including the response data. Then, the communication apparatus 10B transmits the plurality of high-speed packets obtained in the converter 11B to the communication apparatus 10A. The converter 11A converts the plurality of high-speed packets including the response data received by the communication apparatus 10A into a low-speed packet including the response data. Then, the communication apparatus 10A transmits the low-speed packet obtained in the converter 11A to the processing unit 2A. It can also be said that the communication system 5 relays and transmits the low-speed packet transmitted by the processing unit 2B to the processing unit 2A. In the following, when the converter 11A and the converter 11B need not be distinguished from each other, each of the converter 11A and the converter 11B is referred to as a converter 11.

Note that the low-speed communication method and the high-speed communication method are not limited to the above example. Functions of the processing unit 2A and the processing unit 2B are not limited to the above example.

<Configuration Example of Communication Apparatuses>

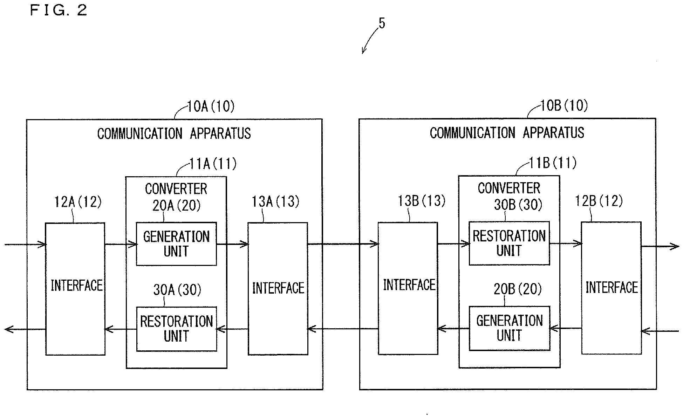

FIG. 2 is a schematic diagram illustrating an example of a configuration of the communication apparatus 10A and the communication apparatus 10B. Each of the communication apparatus 10A and the communication apparatus 10B is implemented by a hardware circuit that does not require software to implement its functions, for example. It can also be said that each of the communication apparatus 10A and the communication apparatus 10B is a communication circuit, for example.

As illustrated in FIG. 2, the communication apparatus 10A includes the converter 11A, an interface 12A, and an interface 13A, for example. The converter 11A includes a generation unit 20A and a restoration unit 30A, for example. The communication apparatus 10B includes the converter 11B, an interface 12B, and an interface 13B, for example. The converter 11B includes a generation unit 20B and a restoration unit 30B, for example.

In the following, for the sake of convenience of description, the processing unit 2A side may be regarded as an upper side of the processing system 1, and the low-speed packet transmitted by the processing unit 2A may be referred to as an upper-side low-speed packet. For the sake of convenience of description, the processing unit 2B side may be regarded as a lower side of the processing system 1, and the low-speed packet transmitted by the processing unit 2B may be referred to as a lower-side low-speed packet. The high-speed packet generated by the communication apparatus 10A based on the upper-side low-speed packet may be referred to as an upper-side high-speed packet. The high-speed packet generated by the communication apparatus 10B based on the lower-side low-speed packet may be referred to as a lower-side high-speed packet.

The interface 12A can communicate with the processing unit 2A. The interface 12A is connected to the processing unit 2A with a power line, for example. The interface 12A receives the upper-side low-speed packet from the processing unit 2A. The processing unit 2A transmits the upper-side low-speed packet by using a differential signal, for example. The interface 12A converts the received differential signal into a single-ended signal. Then, the interface 12A outputs the upper-side low-speed packet to the generation unit 20A by using the single-ended signal.

The generation unit 20A sequentially generates a plurality of upper-side high-speed packets, based on the upper-side low-speed packet received by the interface 12A. The interface 13A can communicate with the interface 13B of the communication apparatus 10B. Each time the generation unit 20A generates the upper-side high-speed packet, the interface 13A sequentially outputs the upper-side high-speed packet to the interface 13B of the processing unit 2B. For example, the interface 13A performs modulation processing based on the upper-side high-speed packet, and transmits a modulated signal including the upper-side high-speed packet. For example, the interface 13A is connected to the interface 13B with a power line, and superposes the modulated signal on the power line.

The interface 12B can communicate with the processing unit 2B. The interface 12B is connected to the processing unit 2B with a power line, for example. The interface 12B receives the lower-side low-speed packet from the processing unit 2B. The processing unit 2B transmits the lower-side low-speed packet by using a differential signal, for example. The interface 12B converts the received differential signal into a single-ended signal. Then, the interface 12B outputs the lower-side low-speed packet to the generation unit 20B by using the single-ended signal.

The generation unit 20B sequentially generates a plurality of lower-side high-speed packets, based on the lower-side low-speed packet received by the interface 12B. Each time the generation unit 20B generates the lower-side high-speed packet, the interface 13B sequentially transmits the lower-side high-speed packet to the interface 13A of the processing unit 2A. For example, the interface 13B performs modulation processing based on the lower-side high-speed packet, and transmits a modulated signal including the lower-side high-speed packet. The interface 13B superposes the modulated signal including the lower-side high-speed packet on the power line.

The interface 13B receives the upper-side high-speed packet sequentially transmitted by the interface 13A of the communication apparatus 10A. The interface 13B extracts the modulated signal including the upper-side high-speed packet transmitted by the interface 13A from the power line, performs demodulation processing on the extracted modulated signal, and acquires the upper-side high-speed packet. The restoration unit 30B restores the upper-side low-speed packet, based on the upper-side high-speed packet sequentially received by the interface 13B. The interface 12B transmits the upper-side low-speed packet (also referred to as a restored upper-side low-speed packet) restored in the restoration unit 30B to the processing unit 2B by using the differential signal, for example. Consequently, the processing unit 2B can receive the upper-side low-speed packet transmitted by the processing unit 2A via the communication system 5. It can also be said that the restoration unit 30B generates the restored upper-side low-speed packet obtained by restoring the upper-side low-speed packet, based on the upper-side high-speed packet sequentially received by the interface 13B.

The interface 13A receives the lower-side high-speed packet sequentially transmitted by the interface 13B. The interface 13A extracts the modulated signal including the lower-side high-speed packet transmitted by the interface 13B from the power line, performs demodulation processing on the extracted modulated signal, and acquires the lower-side high-speed packet. The restoration unit 30A restores the lower-side low-speed packet, based on the lower-side high-speed packet sequentially received by the interface 13A. The interface 12A transmits the lower-side low-speed packet (also referred to as a restored lower-side low-speed packet) restored in the restoration unit 30A to the processing unit 2A by using the differential signal, for example. Consequently, the processing unit 2A can receive the lower-side low-speed packet transmitted by the processing unit 2B via the communication system 5. It can also be said that the restoration unit 30A generates the restored lower-side low-speed packet obtained by restoring the lower-side low-speed packet, based on the lower-side high-speed packet sequentially received by the interface 13A.

In the following, when the generation unit 20A and the generation unit 20B need not be distinguished from each other, each of the generation unit 20A and the generation unit 20B is referred to as a generation unit 20. When the restoration unit 30A and the restoration unit 30B need not be distinguished from each other, each of the restoration unit 30A and the restoration unit 30B is referred to as a restoration unit 30. When the interface 12A and the interface 12B that transmit and receive the low-speed packet need not be distinguished from each other, each of the interface 12A and the interface 12B is referred to as an interface 12. When the interface 13A and the interface 13B that transmit and receive the high-speed packet need not be distinguished from each other, each of the interface 13A and the interface 13B is referred to as an interface 13.

<Configuration Example of High-Speed Packet>

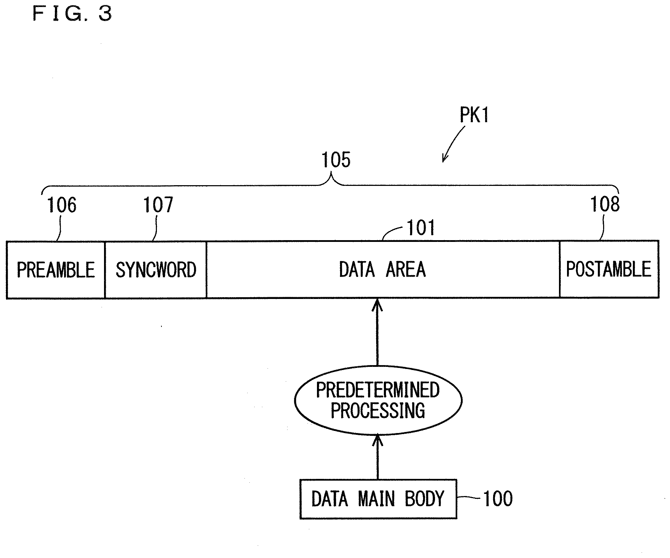

FIG. 3 is a schematic diagram illustrating a configuration example of a high-speed packet PK1. The high-speed packet PK1 includes a data area 101 and attachment data 105 that is attached to the data area 101, for example. The data area 101 includes a data main body 100. The data area 101 is data obtained as a result of predetermined processing being performed on the data main body 100. As will be described later, the predetermined processing includes encoding, interleaving, and so on, for example. The data length of the data area 101 is larger than the data length of the original data main body 100. It can also be said that the data area 101 is the data main body 100 on which the predetermined processing is performed. The data main body 100 may be referred to as a payload or actual data, for example.

The attachment data 105 includes a preamble 106 and a syncword 107 that are added before the data area 101 and a postamble 108 that is added after the data area 101, for example. The preamble 106 is a bit string for synchronizing with the high-speed packet PK1. The syncword 107 is a bit string for identifying the start of the data area 101. The postamble 108 is a bit string for identifying the end of the data area 101.

<Configuration Example of Low-Speed Packet>

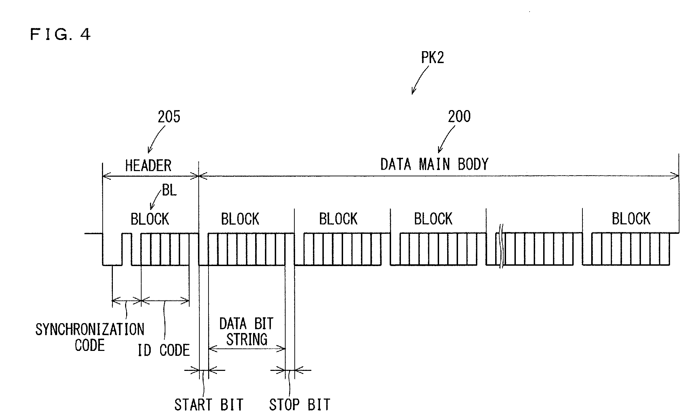

FIG. 4 is a schematic diagram illustrating a configuration example of a low-speed packet PK2. As illustrated in FIG. 4, the low-speed packet PK2 includes A (A is an integer of 2 or greater) blocks BL, for example. Each block BL includes a bit string including a plurality of bits, for example. In the example of FIG. 4, each block BL includes 10 bits. For example, when A = 32, the low-speed packet PK2 includes 320 bits. In other words, the data length of the low-speed packet PK2 is 320 bits.

Each block BL conforms to a UART frame, for example. "UART" is an abbreviation for "Universal Asynchronous Receiver Transmitter". The plurality of bits constituting each block BL include a data bit string including a start bit, a stop bit, and a plurality of data bits, for example. For example, the start bit indicates "0" (i.e., a low level), and the stop bit indicates "1" (i.e., a high level). The data bit string includes data bits of 8 bits, for example.

In the low-speed packet PK2, the block BL at the start constitutes a header 205, and the remaining (A-1) blocks BL constitute a data main body 200. The data main body 200 includes at least one block BL.

The data main body 200 included in the upper-side low-speed packet PK2 includes command data. Specifically, the data bit string of (A-1) blocks BL constituting the data main body 200 included in the upper-side low-speed packet PK2 indicates the command data. The data main body 200 included in the lower-side low-speed packet PK2 includes response data. Specifically, the data bit string of (A-1) blocks BL constituting the data main body 200 included in the lower-side low-speed packet PK2 indicates the response data. The number of the plurality of blocks BL constituting the lower-side low-speed packet PK2 including the response data is larger than the number of the plurality of blocks BL constituting the upper-side low-speed packet PK2 including the command data, for example.

The header 205 includes a synchronization code and an ID code, for example. "ID" is an abbreviation for "identification". The data bit string included in the block BL constituting the header 205 constitutes the synchronization code and the ID code. For example, the synchronization code includes 3 bits, and the ID code includes 5 bits. The synchronization code is a bit string for synchronizing with the low-speed packet PK2. The ID code is a bit string for identifying the data length of the low-speed packet PK2. It can also be said that the ID code is a bit string for identifying the number of bits of the plurality of bits constituting the low-speed packet PK2.

In the present example, out of the plurality of bits constituting the low-speed packet input from the processing unit 2, the communication apparatus 10 divides a first bit group to be transmitted into a plurality of high-speed packets and transmits the plurality of high-speed packets to the communication apparatus 10 of the other party. The first bit group to be transmitted (also referred to as a bit group to be transmitted) is the data bit string of A blocks BL constituting the low-speed packet, for example. The bit group to be transmitted includes A data bit strings. When A = 32, the number of bits of the bit group to be transmitted is 256 bits (= 32 × 8 bits). The communication apparatus 10 that receives the plurality of high-speed packets from the communication apparatus 10 of the other party adds the start bit and the stop bit to each of the A data bit strings constituting the first bit group included in the plurality of high-speed packets, and restores the low-speed packet including the A blocks BL. Then, the communication apparatus 10 transmits the restored low-speed packet (also referred to as a restored low-speed packet) to the processing unit 2. In the following, the low-speed packet to be restored may be referred to as an original low-speed packet.

Here, the number of bits of the data main body 100 that can be included in the high-speed packet may be referred to as the number of data main body bits. It can also be said that the number of data main body bits is the data length of the data main body 100. Each time the interface 12 receives a second bit group having the number of bits smaller than the number of data main body bits out of the first bit group to be transmitted included in the low-speed packet input to the communication apparatus 10, the generation unit 20 of the communication apparatus 10 sequentially generates the high-speed packet including the data main body 100 including the header and the second bit group. Each time the generation unit 20 generates the high-speed packet, the interface 13 sequentially transmits the high-speed packet. The numbers of bits of a plurality of second bit groups respectively included in the plurality of high-speed packets transmitted by the interface 13 may or may not be the same. It can also be said that the first bit group to be transmitted includes a plurality of second bit groups.

Each time the interface 12A receives the second bit group in a specific first bit group to be transmitted included in the upper-side low-speed packet, the generation unit 20A sequentially generates the upper-side high-speed packet including the data main body 100 including the header and the second bit group. Each time the generation unit 20A generates the upper-side high-speed packet, the interface 13A sequentially transmits the upper-side high-speed packet to the interface 13B of the communication apparatus 10B.

Each time the interface 12B receives the second bit group in a specific first bit group to be transmitted included in the lower-side low-speed packet, the generation unit 20B sequentially generates the lower-side high-speed packet including the data main body 100 including the header and the second bit group. Each time the generation unit 20B generates the lower-side high-speed packet, the interface 13B sequentially transmits the lower-side high-speed packet to the interface 13A of the communication apparatus 10A.

For example, a case is considered in which the number of data main body bits is 512 bits and the number of bits of the first bit group is 256 bits. In this case, the number of bits of the second bit group may be set to 40 bits smaller than 256 bits, for example. In this case, the communication apparatus 10 includes the 256-bit first bit group in the high-speed packets by 40 bits and sequentially transmits the high-speed packets. Note that the second bit group included in the last transmitted high-speed packet is the remaining untransmitted 16 bits, instead of 40 bits.

When the interface 12 receives 40 bits from the start (i.e., the second bit group at the start) out of the 256-bit first bit group, the generation unit 20 generates the data main body 100 including the received 40 bits and the header. Then, the generation unit 20 generates the high-speed packet including the generated data main body 100 and outputs the high-speed packet to the interface 13. The interface 13 transmits the input high-speed packet.

When the interface 12 receives the next 40 bits (i.e., the second bit group in the second place from the start) out of the 256-bit first bit group, the generation unit 20 generates the data main body 100 including the received 40 bits and the header. Then, the generation unit 20 generates the high-speed packet including the generated data main body 100 and outputs the high-speed packet to the interface 13.

When the interface 12 further receives the next 40 bits (i.e., the second bit group in the third place from the start) out of the 256-bit first bit group, the generation unit 20 generates the data main body 100 including the received 40 bits and the header. Then, the generation unit 20 generates the high-speed packet including the generated data main body 100 and outputs the high-speed packet to the interface 13. Thereafter, the generation unit 20 operates in a similar manner until the whole 256-bit first bit group is transmitted from the interface 13. Note that the high-speed packet transmitted by the interface 13 for the seventh time includes the last 16 bits of the first bit group. In other words, the high-speed packets for the first to sixth times each include the 40-bit second bit group, and the high-speed packet for the seventh time includes the 16-bit second bit group.

In the following, the number of high-speed packets necessary to transmit the whole first bit group to be transmitted included in the low-speed packet is represented by N. N is an integer of 2 or greater. The communication apparatus 10 divides the first bit group to be transmitted of the received low-speed packet into N high-speed packets and sequentially transmits the N high-speed packets. The N high-speed packets include the A data bit strings. N second bit groups included in the N high-speed packets constitute the A data bit strings. The low-speed packet includes the N second bit groups. By receiving the N high-speed packets, the communication apparatus 10 can receive the A data bit strings (i.e., the N second bit groups) included in the low-speed packet.

The restoration unit 30 generates the restored low-speed packet obtained by restoring the original low-speed packet, based on the high-speed packets sequentially received by the interface 13. The interface 12 transmits the restored low-speed packet generated in the restoration unit 30 to the processing unit 2. The interface 13 sequentially receives the high-speed packets including the second bit groups being a part of the low-speed packet, and thereby sequentially receives the data bit string of the low-speed packet. Each time the interface 13 receives the data bit string, the restoration unit 30 adds the start bit and the stop bit to the data bit string, and restores one block BL. The restoration unit 30 sequentially restores A blocks BL. Each time the restoration unit 30 restores the block BL, the interface 12 transmits the restored block BL (also referred to as a restored block). Consequently, A restored blocks are successively transmitted from the interface 12, and restored low-speed blocks are transmitted.

<Configuration Example of Generation Units Included in Converters of Communication Apparatuses>

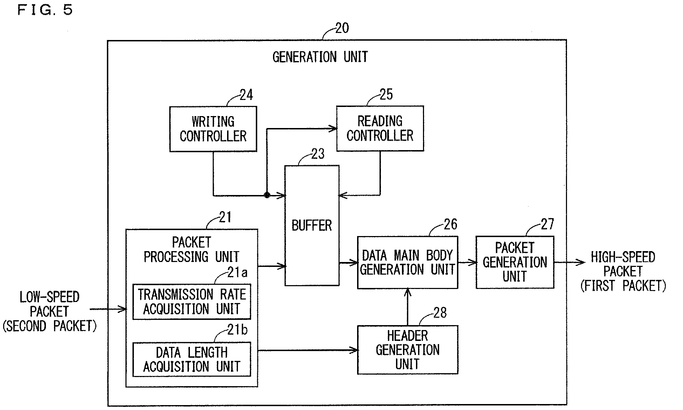

FIG. 5 is a schematic diagram illustrating an example of a configuration of the generation unit 20A and the generation unit 20B. Configurations of the generation unit 20A and the generation unit 20B are the same as each other, for example. As illustrated in FIG. 5, the generation unit 20 includes a packet processing unit 21, a buffer 23, a writing controller 24, a reading controller 25, a data main body generation unit 26, a packet generation unit 27, and a header generation unit 28, for example. Each of these configurations included in the generation unit 20 is implemented by a hardware circuit that does not require software to implement its functions, for example.

To the generation unit 20, the plurality of bits constituting the low-speed packet received by the interface 12 are input bit by bit from the start in order. In other words, from the interface 12, the plurality of bits constituting the low-speed packet are output bit by bit from the start in order.

The generation unit 20 operates based on a clock signal having a frequency that is twice a numerical value of the high-speed transmission rate (i.e., the transmission rate of the high-speed packet) or higher, for example. It can also be said that an operating frequency (i.e., a clock frequency) of the generation unit 20 is set to a frequency that is twice a numerical value (for example, 120M) of the high-speed transmission rate, for example. The generation unit 20 operates based on a clock signal of 240 MHz, for example.

The packet processing unit 21 processes the low-speed packet received by the interface 12. To the packet processing unit 21, the plurality of bits constituting the low-speed packet received by the interface 12 are input bit by bit from the start in order. The packet processing unit 21 performs predetermined processing, based on the header 205 (i.e., the block BL at the start) input to the generation unit 20, for example. The packet processing unit 21 acquires the second bit groups included in the data main body 100 input to the generation unit 20. To the generation unit 20, N second bit groups are sequentially input. The packet processing unit 21 sequentially acquires the second bit groups sequentially input to the generation unit 20. The second bit groups sequentially acquired by the packet processing unit 21 are sequentially written into the buffer 23. The packet processing unit 21 sequentially outputs each bit of the N second bit groups to the buffer 23 bit by bit.

The buffer 23 is a FIFO buffer, for example. "FIFO" is an abbreviation for "First In First Out". The writing controller 24 controls writing of data into the buffer 23. The writing controller 24 outputs a writing pointer to the buffer 23, for example. By controlling the writing pointer, the writing controller 24 sequentially writes each bit output bit by bit by the packet processing unit 21 into the buffer 23.

The reading controller 25 controls reading of data from the buffer 23. The reading controller 25 outputs a reading pointer to the buffer 23, for example. By controlling the reading pointer, the reading controller 25 sequentially reads the second bit groups from the buffer 23. Each time a bit included in the second bit group is written into the buffer 23, the reading controller 25 reads bits from the buffer 23. When writing of a bit of the second bit group into the buffer 23 starts, the reading controller 25 immediately starts to read bits from the buffer 23, for example. In other words, when a first bit of the N second bit groups is written into the buffer 23, the reading controller 25 immediately starts to read bits from the buffer 23. It can also be said that the reading controller 25 starts to read bits from the buffer 23, in response to writing of the first bit into the buffer 23. By monitoring the writing pointer output by the writing controller 24, the reading controller 25 can recognize that a bit has been written into the buffer 23. Each bit of the N second bit groups read bit by bit from the buffer 23 is sequentially input to the data main body generation unit 26 bit by bit.

The header generation unit 28 generates a header (also referred to as a high-speed-side header) to be included in the data main body 100, based on results of processing based on the header 205 in the packet processing unit 21. A configuration example of the high-speed-side header will be described later in detail. In the following, the header 205 is also referred to as a low-speed-side header 205.

The data main body generation unit 26 generates the data main body 100 including the second bit groups read from the buffer 23 and the high-speed-side header generated in the header generation unit 28. Each time the second bit group is output from the buffer 23 that outputs each bit of the N second bit groups bit by bit, the data main body generation unit 26 generates the data main body 100 including the second bit groups and the high-speed-side header. In other words, each time the second bit groups are completed, the data main body generation unit 26 generates the data main body 100 including the second bit groups and the high-speed-side header.

The data main body generation unit 26 assigns the high-speed-side header at the start and assigns the second bit groups subsequent to the high-speed-side header in the data main body 100. The number of bits of the bit group including the high-speed-side header and the second bit groups is smaller than the number of data main body bits. The data main body generation unit 26 sequentially generates N data main bodies 100 for each low-speed packet. The data main bodies 100 sequentially generated by the data main body generation unit 26 are sequentially input to the packet generation unit 27.

The packet generation unit 27 generates the high-speed packet including the data main body 100 generated by the data main body generation unit 26. Each time the data main body 100 is generated in the data main body generation unit 26, the packet generation unit 27 generates the high-speed packet including the data main body 100. The packet generation unit 27 sequentially generates N high-speed packets for each low-speed packet. The high-speed packets sequentially generated by the packet generation unit 27 are sequentially input to the interface 13. The interface 13 sequentially transmits the sequentially input high-speed packets.

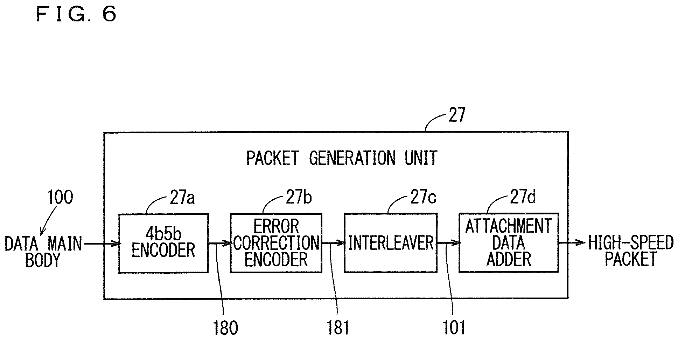

FIG. 6 is a schematic diagram illustrating a configuration example of the packet generation unit 27. As illustrated in FIG. 6, the packet generation unit 27 includes a 4b5b encoder 27a, an error correction encoder 27b, an interleaver 27c, and an attachment data adder 27d, for example.

The 4b5b encoder 27a performs 4b5b encoding on the data main body 100. The 4b5b encoder 27a converts every 4 bits of the data main body 100 into 5-bit codes. In the following, the data main body 100 subjected to 4b5b encoding is referred to as 4b5b-encoded data 180.

The error correction encoder 27b performs error correction encoding on the 4b5b-encoded data 180. The error correction encoder 27b performs BCH encoding on the 4b5b-encoded data 180, for example. "BCH" is an abbreviation for "Bose-Chaudhuri-Hocquenghem". The error correction encoder 27b adds 10-bit error correction bits (also referred to as redundant bits) to every 5 bits in the 4b5b-encoded data 180, for example, to thereby perform BCH encoding. Such BCH encoding may be referred to as BCH (15, 5) encoding. When data including the 5 bits included in the 4b5b-encoded data 180 and the 10-bit error correction bits added thereto is referred to as unit encoded data, the unit encoded data has a 3-bit error correction capability. The unit encoded data is also referred to as BCH codes. In the following, the 4b5b-encoded data 180 subjected to error correction encoding in the error correction encoder 27b is referred to as error-correction-encoded data 181. The error-correction-encoded data 181 includes a plurality of pieces of unit encoded data.

For example, when the number of data main body bits is 512 bits, the number of bits of the 4b5b-encoded data 180 is 640 bits. Accordingly, the error-correction-encoded data 181 includes 128 pieces of unit encoded data. The number of bits of the error-correction-encoded data 181 is 1920 (= 128 $\times$ 15) bits.

The interleaver 27c performs interleaving on the error-correction-encoded data 181. The interleaved error-correction-encoded data 181 corresponds to the data area 101 to be included in the high-speed packet. The interleaver 27c performs interleaving on the error-correction-encoded data 181, and generates the data area 101.

Depth of interleaving in the interleaver 27c may be "8", for example. In this case, in the error-correction-encoded data 181, the interleaver 27c regards eight pieces of unit encoded data as a set of target data, and rearranges the bits of the target data for each piece of target data. When BCH (15, 5) encoding is performed in the error correction encoder 27b, even if a 24-bit burst error occurs in the target data with the rearranged bits, the error can be corrected.

The attachment data adder 27d adds the attachment data 105 including the preamble 106, the syncword 107, and the postamble 108 to the data area 101 (i.e., the interleaved error-correction-encoded data 181) generated in the interleaver 27c, and generates the high-speed packet. The high-speed packet generated in the attachment data adder 27d is input to the interface 13.

<Configuration Example of High-Speed-Side Header>

In the N second bit groups included in the low-speed packet, the second bit group first input to the generation unit 20 (i.e., the second bit group first received in the interface 12) is referred to as a start second bit group, and the second bit group last input to the generation unit 20 (i.e., the second bit group last received in the interface 12) is referred to as a last second bit group. In the N second bit groups included in the low-speed packet, the second bit groups other than the start second bit group and the last second bit group are each referred to as an intermediate second bit group.

In the present example, basically, the numbers of bits of the N second bit groups included in the low-speed packet are the same as each other. Note that, depending on the number of bits of the first bit group to be transmitted included in the low-speed packet, the number of bits of the last second bit group may not match the number of bits of each of other second bit groups, that is, the number of bits of each of the start second bit group and the intermediate second bit group.

For example, a case is considered in which the number of bits of the first bit group (i.e., the bit group to be transmitted) is 256 bits and the number of bits of each of the start second bit group and the intermediate second bit group is 40 bits. In this case, the number of bits of the last second bit group is 16 bits, and does not match the number of bits of each of other second bit groups. In contrast, a case is considered in which the number of bits of the first bit group is 256 bits and the number of bits of each of the start second bit group and the intermediate second bit group is 32 bits. In this case, the number of bits of the last second bit group is 32 bits, and matches the number of bits of each of other second bit groups.

In the following, the number of bits of the start second bit group and the number of bits of the intermediate second bit group are referred to as a basic number of bits of the second bit group. The number of bits of the last second bit group may be different from the basic number of bits of the second bit group, depending on the number of bits of the first bit group.

The data main body 100 including the start second bit group is referred to as a start data main body 100a, the data main body 100 including the last second bit group is referred to as a last data main body 100c, and the data main body 100 including the intermediate second bit group is referred to as an intermediate data main body 100b. The high-speed-side header included in the start data main body 100a is referred to as a start header 110a, the high-speed-side header included in the last data main body 100c is referred to as a last header 110c, and the high-speed-side header included in the intermediate data main body 100b is referred to as an intermediate header 110.

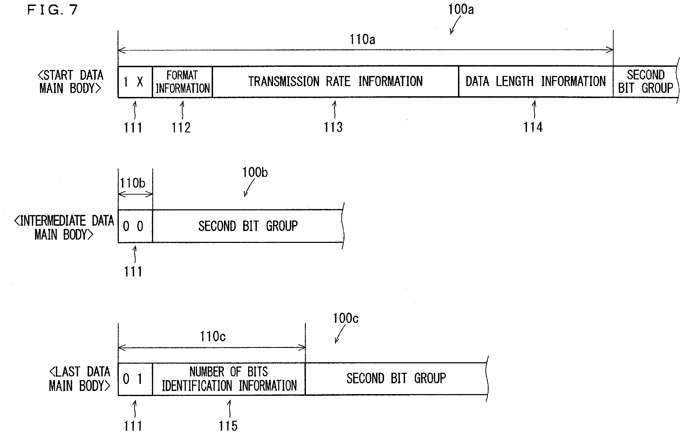

FIG. 7 is a schematic diagram illustrating an example of the start data main body 100a, the intermediate data main body 100b, and the last data main body 100c. In the present example, configurations of the start header 110a, the intermediate header 110b, and the last header 110c are different from each other. In each communication apparatus 10, the configurations of the start header 110a, the intermediate header 110b, and the last header 110c are recognized.

As illustrated in FIG. 7, the start header 110a includes type information 111, format information 112, transmission rate information 113, and data length information 114, for example. The intermediate header 110b includes only the type information 111, for example. The last header 110c includes the type information 111 and number of bits identification information 115, for example.

The type information 111 indicates whether the data main body 100 including the type information 111 is one of the start data main body 100a, the intermediate data main body 100b, and the last data main body 100c. The communication apparatus 10 can identify whether the data main body 100 is one of the start data main body 100a, the intermediate data main body 100b, and the last data main body 100c, based on the type information 111 included in the received data main body 100.

The type information 111 includes 2 bits, for example. For example, when the most significant bit of the 2 bits constituting the type information 111 indicates "1", the type information 111 indicates that the data main body 100 including the type information 111 is the start data main body 100a. When the type information 111 indicates "00", the type information 111 indicates that the data main body 100 including the type information 111 is the intermediate data main body 100b. When the type information 111 indicates "01", the type information 111 indicates that the data main body 100 including the type information 111 is the last data main body 100c.

The transmission rate information 113 indicates the low-speed transmission rate of the low-speed packet. As illustrated in FIG. 5, the packet processing unit 21 includes a transmission rate acquisition unit 21a that acquires the low-speed transmission rate, based on the low-speed-side header 205 included in the low-speed packet. The transmission rate information 113 indicates the low-speed transmission rate acquired in the transmission rate acquisition unit 21a. The transmission rate information 113 includes 16 bits, for example. The communication apparatus 10 can identify the low-speed transmission rate of the original low-speed packet to be restored, based on the transmission rate information 113 included in the received start data main body 100a. Note that the transmission rate acquisition unit 21a will be described later in detail.

In the transmission rate information 113, the low-speed transmission rate may be represented by a numerical value, or may be represented by identification information. In other words, the transmission rate information 113 may include a numerical value of the low-speed transmission rate, or may include identification information of the low-speed transmission rate. The format information 112 indicates in what format the low-speed transmission rate is represented in the transmission rate information 113, that is, whether the low-speed transmission rate is represented by a numerical value or is represented by identification information.

The format information 112 includes 2 bits, for example. When the format information 112 indicates "01", the low-speed transmission rate is represented by a numerical value in the transmission rate information 113. When the format information 112 indicates "10", the low-speed transmission rate is represented by identification information in the transmission rate information 113.

Note that, when the low-speed transmission rate is known in the communication apparatus 10A and the communication apparatus 10B, the packet processing unit 21 need not acquire the low-speed transmission rate. In this case, the format information 112 may indicate that the low-speed transmission rate is known. For example, when the format information 112 indicates "00", the format information 112 may indicate that the low-speed transmission rate is known. When the low-speed transmission rate is known, the transmission rate information 113 may indicate the known low-speed transmission rate stored in the packet processing unit 21 in advance, using a numerical value.

The data length information 114 indicates the data length of the low-speed packet (also referred to as a low-speed packet length). As illustrated in FIG. 5, the packet processing unit 21 includes a data length acquisition unit 21b that acquires the data length of the low-speed packet, based on the low-speed-side header 205 included in the low-speed packet. The data length information 114 indicates the low-speed packet length acquired in the data length acquisition unit 21b. The data length information 114 includes 9 bits, for example. The data length information 114 represents the low-speed packet length, using a numerical value, for example. The communication apparatus 10 can identify the data length of the restored original low-speed packet, based on the data length information 114 included in the received start data main body 100a. Note that the data length acquisition unit 21b will be described later in detail.

The number of bits identification information 115 included in the last header 110c is information for identifying the number of bits of the last second bit group included in the last data main body 100c. The number of bits identification information 115 includes 9 bits, for example. The number of bits identification information 115 may indicate the number of bits of the bit group including the last header 110c and the last second bit group, using a numerical value, for example. In this case, the communication apparatus 10 that has received the last data main body 100c can identify the number of bits of the last second bit group, based on the number of bits of the last header 110c and the number of bits identification information 115 included in the last data main body 100c that are known. The number of bits identification information 115 may indicate the number of bits of the last second bit group, using a numerical value. In this case, the communication apparatus 10 can identify the number of bits of the last second bit group, based on the number of bits identification information 115 included in the received last data main body 100c.

As can be understood from the description above, the number of bits of the start header 110a is 29 bits, for example, the number of bits of the intermediate header 110b is 2 bits, for example, and the number of bits of the last header 110c is 11 bits, for example. The number of bits of the bit group including the start header 110a and the start second bit group is smaller than the number of bits of the data main body 100. The number of bits of the bit group including the intermediate header 110b and the intermediate second bit group is smaller than the number of bits of the data main body 100. The number of bits of the bit group including the last header 110c and the last second bit group is smaller than the number of bits of the data main body 100. In the data main body 100, a part of the data main body 100 constitutes the high-speed-side header and the second bit groups.

Each bit other than the start header 110a and the start second bit group out of the start data main body 100a may be any value. For example, such each bit may be unfixed, or may be a dummy fixed value. The same applies to each bit other than the intermediate header 110b and the intermediate second bit group out of the intermediate data main body 100b. The same applies to each bit other than the last header 110c and the last second bit group out of the last data main body 100c.

<Operation Example of Transmission Rate Acquisition Unit>

The transmission rate acquisition unit 21a includes a counter that counts up based on a clock signal of 240 MHz, for example. For example, each time the clock signal rises, the counter increments a count value by 1. The transmission rate acquisition unit 21a acquires the low-speed transmission rate by using the counter. The following will describe three acquisition methods for the low-speed transmission rate.

<First Acquisition Method>

In the first acquisition method, the transmission rate acquisition unit 21a measures time from a first rise after the start bit of the low-speed-side header 205 to a first fall after the start bit by using the counter. As illustrated in FIG. 4, the first rise after the start bit is a rise at the second bit from the start of the synchronization code. The first fall after the start bit is a fall at the second bit from the start of the synchronization code.

The transmission rate acquisition unit 21a uses a count number in the counter from the first rise after the start bit to the first fall after the start bit as measurement results of the time from the first rise after the start bit to the first fall after the start bit. Then, the transmission rate acquisition unit 21a acquires the low-speed transmission rate, based on the measurement results, that is, based on the acquired count number. When the acquired count number is represented by C1 and the low-speed transmission rate is represented by LT (the unit is Mbps), the transmission rate acquisition unit 21a acquires the low-speed transmission rate LT, using the following expression (1).
[Expression 1]

$$LT = 240 \div C1 \qquad \cdots (1)$$

The header generation unit 28 includes the transmission rate information 113 including a numerical value of the low-speed transmission rate acquired by the transmission rate acquisition unit 21a using expression (1) in the start header 110a, for example. In this case, the format information 112 indicates "01".

<Second Acquisition Method>

In the second acquisition method, the transmission rate acquisition unit 21a measures time from a fall of the start bit of the low-speed-side header 205 to a first rise after the start bit by using the counter. The transmission rate acquisition unit 21a uses a count number in the counter from the fall of the start bit to the first rise after the start bit as measurement results of the time from the fall of the start bit to the first rise after the start bit. Then, the transmission rate acquisition unit 21a acquires the low-speed transmission rate, based on the measurement results, that is, based on the acquired count number. When the acquired count number is represented by C2, the transmission rate acquisition unit 21a acquires the low-speed transmission rate LT, using the following expression (2).
[Expression 2]

$$LT = 240 \div (C2 \div 2) \qquad \cdots (2)$$

The header generation unit 28 includes the transmission rate information 113 including a numerical value of the low-speed transmission rate acquired by the transmission rate acquisition unit 21a using expression (2) in the start header 110a, for example.

As can be understood from the description above, in the second acquisition method, the low-speed transmission rate is acquired based on the count number in time corresponding to 2 bits of the low-speed packet. On the other hand, in the first acquisition method, the low-speed transmission rate is acquired based on the count number in time corresponding to 1 bit of the low-speed packet. Accordingly, a difference of a timing of change of bits in the low-speed packet less affects the count number in the second acquisition method than in the first acquisition method. Thus, the low-speed transmission rate can be more accurately acquired in the second acquisition method than in the first acquisition method.

<Third Acquisition Method>

In the third acquisition method, the transmission rate acquisition unit 21a measures time from a fall of the start bit of the low-speed-side header 205 to a first fall after the start bit by using the counter. The transmission rate acquisition unit 21a uses a count number in the counter from the fall of the start bit to the first fall after the start bit as measurement results of the time from the fall of the start bit to the first fall after the start bit. Then, the transmission rate acquisition unit 21a acquires the low-speed transmission rate, based on the measurement results, that is, based on the acquired count number. When the acquired count number is represented by C3, the transmission rate acquisition unit 21a acquires the low-speed transmission rate LT, using the following expression (3).
[Expression 3]

$$LT = 240 \div (C3 \div 3) \qquad \cdots (3)$$

The header generation unit 28 includes the transmission rate information 113 including a numerical value of the low-speed transmission rate acquired by the transmission rate acquisition unit 21a using expression (3) in the start header 110a, for example.

As can be understood from the description above, in the third acquisition method, the low-speed transmission rate is acquired based on the count number in time corresponding to 3 bits of the low-speed packet. Accordingly, a difference of a timing of change of bits in the low-speed packet less affects the count number in the third acquisition method than in the second acquisition method and the first acquisition method. Thus, the low-speed transmission rate can be more accurately acquired in the third acquisition method than in the second acquisition method and the first acquisition method.

Note that the transmission rate acquisition unit 21a may acquire the low-speed transmission rate by using a table, instead of calculation. For example, a case is considered in which M types (M is an integer of 2 or greater) of set values are present for the low-speed transmission rate. In this case, in the first acquisition method, a first table, in which values of the count number C1 are respectively associated with the M types of set values of the low-speed transmission rate, is stored in the transmission rate acquisition unit 21a in advance. The transmission rate acquisition unit 21a acquires the count number C1 in the counter from the first rise after the start bit to the first fall after the start bit. Then, the transmission rate acquisition unit 21a identifies a set value of the low-speed transmission rate associated with the same value as the acquired count number C1 in the first table. Note that, if the same value as the acquired count number C1 is not present, the transmission rate acquisition unit 21a identifies a set value of the low-speed transmission rate associated with a value closest to the acquired count number C1 in the first table. Then, the transmission rate acquisition unit 21a uses the identified set value as the value of the low-speed transmission rate of the low-speed packet received by the communication apparatus 10.

In this manner, when the low-speed transmission rate is acquired by using the first table, even if the count number in the counter includes an error, the transmission rate acquisition unit 21a can appropriately acquire the low-speed transmission rate.

When the first table is used, the header generation unit 28 may store a second table in advance, in which pieces of identification information (for example, identification numbers) of the set values are respectively associated with the M types of set values of the low-speed transmission rate. In this case, the header generation unit 28 identifies a piece of identification information corresponding to the same set value as the value of the low-speed transmission rate acquired by the transmission rate acquisition unit 21a in the second table. Then, the header generation unit 28 includes the transmission rate information 113 including the identified piece of identification information in the start header 110a. In this case, the format information 112 indicates "10".

The second table is stored in each communication apparatus 10 in advance. The communication apparatus 10 identifies a set value of the low-speed transmission rate associated with the same piece of identification information as the piece of identification information included in the transmission rate information 113 included in the received start header 110a in the second table. Then, the communication apparatus 10 uses the identified set value as the value of the low-speed transmission rate of the low-speed packet to be restored.

Note that, in the second acquisition method and the third acquisition method as well, in a similar manner, the transmission rate acquisition unit 21a can acquire the low-speed transmission rate by using a table. In the second acquisition method and the third acquisition method as well, in a similar manner, the header generation unit 28 can include the transmission rate information 113 including the piece of identification information of the low-speed transmission rate acquired in the transmission rate acquisition unit 21a in the start header 110a.

The packet processing unit 21 samples each bit at or after a timing of acquiring the low-speed transmission rate in the low-speed packet, based on the low-speed transmission rate acquired in the transmission rate acquisition unit 21a, for example. For example, a case is considered in which the low-speed transmission rate is acquired using the first acquisition method. In this case, the packet processing unit 21 samples the third bit from the start of the synchronization code at a first timing at which the counter has counted only a half of the count number C1 from a fall of the second bit from the start of the synchronization code, and thereby identifies a value of the bit. The time in which the counter counts only a half of the count number C1 corresponds to a half of the time corresponding to 1 bit of the low-speed packet. Then, each time the counter counts only the count number C1, the packet processing unit 21 samples the bits of the low-speed packet. Consequently, the packet processing unit 21 can sample each bit near the center of the bit of the low-speed packet.

Note that, even when the low-speed transmission rate is acquired using the second acquisition method and the third acquisition method, the packet processing unit 21 can sample each bit near the center of the bit of the low-speed packet based on the acquired low-speed transmission rate.

<Operation Example of Data Length Acquisition Unit>

The data length acquisition unit 21b can acquire the low-speed packet length, based on the ID code included in the low-speed-side header 205, for example. In the present example, L types (L is an integer of 2 or greater) of set values are present for the low-speed packet length. Unique ID codes are respectively assigned to the L types of set values. It can also be said that the ID code is identification information of the low-speed packet length. The ID code indicates the low-speed packet length. The low-speed-side header 205 includes the ID code assigned to a value of the data length of the low-speed packet including the low-speed-side header 205.

In the data length acquisition unit 21b, a third table, in which the ID codes assigned to the set values are respectively associated with the L types of set values of the low-speed packet length, is stored in advance. The data length acquisition unit 21b identifies a set value of the data length associated with the same ID code as the ID code to be input to the generation unit 20 in the third table. Then, the data length acquisition unit 21b uses the identified set value as the value of the data length of the low-speed packet to be input to the generation unit 20. The header generation unit 28 includes the data length information 114 including the value of the low-speed packet length acquired in the data length acquisition unit 21b in the start header 110a.

The packet processing unit 21 identifies the number of bits of the last second bit group, based on the low-speed packet length identified in the data length acquisition unit 21b, the known number of bits of the high-speed-side header, and the known basic number of bits of the second bit group. The header generation unit 28 generates the number of bits identification information 115 for identifying the number of bits of the last second bit group identified in the packet processing unit 21.

The packet processing unit 21 can identify whether or not each bit to be sequentially input to the packet processing unit 21 is a bit included in the second bit group, based on the low-speed packet length identified in the data length acquisition unit 21b, the known number of bits of the high-speed-side header, and the known basic number of bits of the second bit group. When the bit input to the packet processing unit 21 is a bit included in the second bit group, the packet processing unit 21 outputs the input bit to the buffer 23. The bit output from the packet processing unit 21 is written into the buffer 23 via control performed on the buffer 23 by the writing controller 24. Consequently, each time a bit included in the second bit group is input to the generation unit 20, the bit is stored in the buffer 23. Therefore, each bit of the N second bit groups is sequentially written into the buffer 23 bit by bit. Each time a bit included in the second bit group is obtained, the generation unit 20 stores the bit in the buffer 23.

<Configuration Example of Restoration Units Included in Converters of Communication Apparatuses>

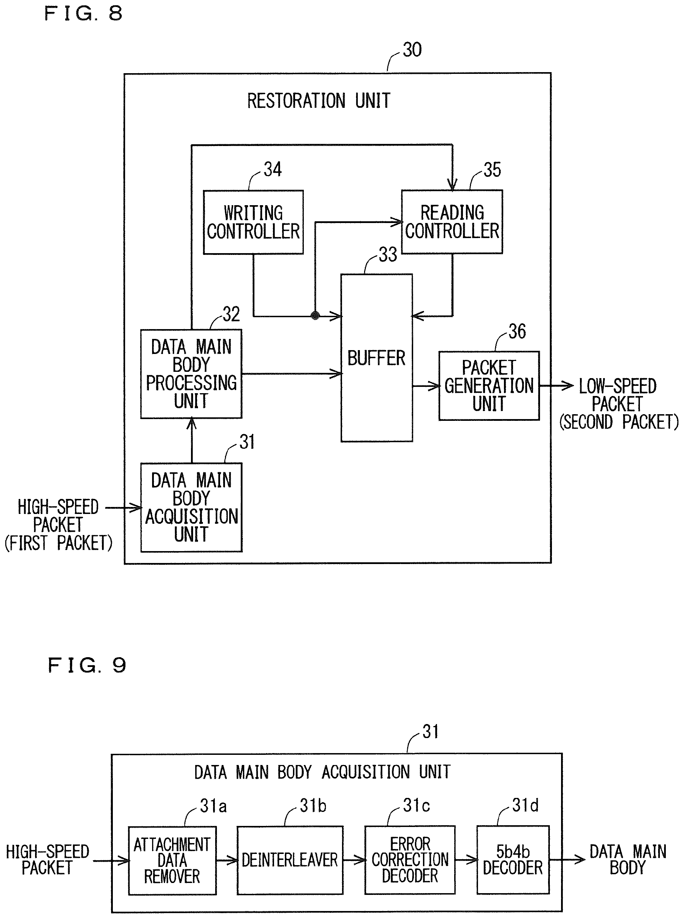

FIG. 8 is a schematic diagram illustrating an example of a configuration of the restoration unit 30A and the restoration unit 30B. Configurations of the restoration unit 30A and the restoration unit 30B are the same as each other, for example. As illustrated in FIG. 8, the restoration unit 30 includes a data main body acquisition unit 31, a data main body processing unit 32, a buffer 33, a writing controller 34, a reading controller 35, and a packet generation unit 36, for example. Each of these configurations included in the restoration unit 30 is implemented by a hardware circuit that does not require software to implement its functions, for example.

To the restoration unit 30, the plurality of bits constituting the high-speed packet received by the interface 13 are input bit by bit from the start in order. In other words, from the interface 13, the plurality of bits constituting the high-speed packet are transmitted bit by bit from the start in order.

The restoration unit 30 operates based on a clock signal having a frequency that is twice a numerical value of the high-speed transmission rate, for example. The restoration unit 30 operates based on a clock signal of 240 MHz, for example.

The data main body acquisition unit 31 acquires the data main body 100 from the high-speed packet input to the restoration unit 30. Each time the high-speed packet is input to the restoration unit 30, the data main body acquisition unit 31 acquires the data main body 100 from the input high-speed packet. The data main body 100 sequentially acquired in the data main body acquisition unit 31 is sequentially input to the data main body processing unit 32.

FIG. 9 is a schematic diagram illustrating a configuration example of the data main body acquisition unit 31. As illustrated in FIG. 9, the data main body acquisition unit 31 includes an attachment data remover 31a, a deinterleaver 31b, an error correction decoder 31c, and a 5b4b decoder 31d, for example.

The attachment data remover 31a removes the attachment data 105 from the high-speed packet, and acquires the data area 101. The deinterleaver 31b performs deinterleaving on the data area 101, and acquires the error-correction-encoded data 181. The error correction decoder 31c performs error correction on the error-correction-encoded data 181, and restores the 4b5b-encoded data 180. The 5b4b decoder 31d performs 5b4b decoding on the restored 4b5b-encoded data 180, and restores the data main body 100. Consequently, the data main body 100 is acquired from the high-speed packet.

The buffer 33 is a FIFO buffer, for example. The writing controller 34 controls writing of data into the buffer 33. The writing controller 34 outputs a writing pointer to the buffer 33, for example. By controlling the writing pointer, the writing controller 34 controls writing of data into the buffer 33. The reading controller 35 controls reading of data from the buffer 33. The reading controller 35 outputs a reading pointer to the buffer 33, for example. By controlling the reading pointer, the reading controller 35 controls reading of data from the buffer 33.

The data main body processing unit 32 processes the data main body 100 (also referred to as an acquired data main body 100) acquired in the data main body acquisition unit 31. The data main body processing unit 32 acquires the type information 111 from the acquired data main body 100, for example. Then, data main body processing unit 32 identifies whether the acquired data main body 100 is one of the start data main body 100a, the intermediate data main body 100b, and the last data main body 100c, based on the acquired type information 111.

When the acquired data main body 100 is the start data main body 100a, the data main body processing unit 32 acquires the format information 112, the transmission rate information 113, and the data length information 114 from the acquired data main body 100. The data main body processing unit 32 acquires the start second bit group from the acquired data main body 100. Because the number of bits (i.e., the basic number of bits) of the start second bit group is known, the data main body processing unit 32 can acquire the start second bit group from the acquired data main body 100.

When the acquired format information 112 indicates "01", the data main body processing unit 32 identifies the value of the low-speed transmission rate, based on the transmission rate information 113. On the other hand, when the format information 112 indicates "10", the data main body processing unit 32 identifies the value of the low-speed transmission rate, based on the identification information indicated by the transmission rate information 113 and the second table. The value of the low-speed transmission rate identified in the data main body processing unit 32 is reported to the reading controller 35.

The data main body processing unit 32 identifies the low-speed packet length, based on the acquired data length information 114. The data main body processing unit 32 outputs each bit of the acquired start second bit group to the buffer 33 bit by bit.

When the acquired data main body 100 is the intermediate data main body 100b, the data main body processing unit 32 acquires the intermediate second bit group from the acquired data main body 100. Then, the data main body processing unit 32 outputs each bit of the acquired intermediate second bit group to the buffer 33 bit by bit. Because the number of bits (i.e., the basic number of bits) of the intermediate second bit group is known, the data main body processing unit 32 can acquire the intermediate second bit group from the acquired data main body 100.

When the acquired data main body 100 is the last data main body 100c, the data main body processing unit 32 acquires the number of bits identification information 115 from the acquired data main body 100. Then, the data main body processing unit 32 identifies the number of bits of the last second bit group, based on the acquired number of bits identification information 115.

The data main body processing unit 32 acquires the last second bit group from the acquired data main body 100, based on the identified number of bits of the last second bit group. Then, the data main body processing unit 32 outputs each bit of the acquired last second bit group to the buffer 33 bit by bit.

By controlling the writing pointer, the writing controller 34 sequentially writes each bit of the N second bit groups output bit by bit by the data main body processing unit 32 into the buffer 33 bit by bit.

Each time a bit included in the second bit group is written into the buffer 33, the reading controller 35 reads bits from the buffer 33. When writing of a bit of the second bit group into the buffer 33 starts, the reading controller 35 immediately starts to read bits from the buffer 33, for example. In other words, when a first bit of the N second bit groups is written into the buffer 33, the reading controller 35 immediately starts to read bits from the buffer 33. It can also be said that the reading controller 35 starts to read bits from the buffer 33, in response to writing of the first bit into the buffer 33. By monitoring the writing pointer output by the writing controller 34, the reading controller 35 can recognize that a bit has been written into the buffer 33. Each bit of the N second bit groups read bit by bit from the buffer 33 is sequentially input to the packet generation unit 36 bit by bit. The reading controller 35 controls the buffer 33 so that the bits are transmitted from the buffer 33 to the packet generation unit 36 at the same transmission rate as the low-speed transmission rate reported from the data main body processing unit 32.

The packet generation unit 36 generates the low-speed packet including the N second bit groups output from the buffer 33, and thereby restores the original low-speed packet including the N second bit groups.

When a plurality of bits corresponding to one data bit string (i.e., a plurality of bits constituting one data bit string) are output from the buffer 33, the packet generation unit 36 adds the start bit and the stop bit to the plurality of bits, and generates one block BL. The one block BL generated in the packet generation unit 36 corresponds to one block BL included in the original low-speed packet having been restored. Each time a plurality of bits of one data bit string are output from the buffer 33, the packet generation unit 36 generates one block BL including the plurality of bits. Consequently, the low-speed packet including the N second bit groups output from the buffer 33 is generated. In other words, the restored low-speed packet, which is obtained by restoring the original low-speed packet, is generated. The packet generation unit 36 outputs each bit of the restored low-speed packet to the interface 12 at the same transmission rate as the low-speed transmission rate. The interface 12 transmits each bit of the restored low-speed block from the packet generation unit 36 at the same transmission rate as the low-speed transmission rate.

<Example of Series of Operation of Communication System>

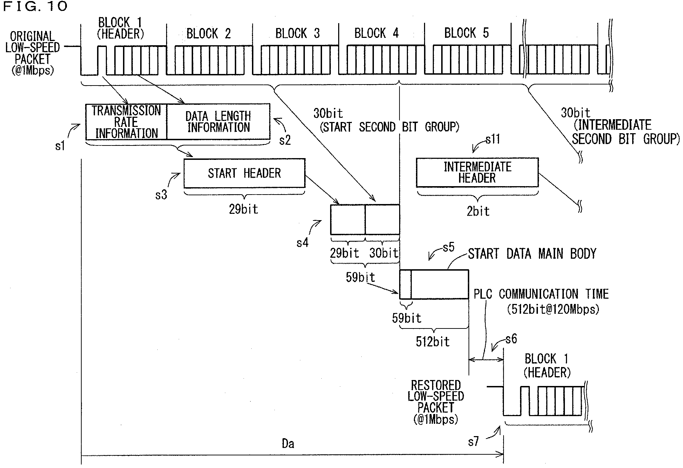

FIGS. 10 to 12 are schematic diagrams illustrating an example of a series of operation of the communication system 5, in which the communication system 5 receives the low-speed packet from one processing unit 2 and relays the received low-speed packet to another processing unit 2. FIGS. 10 to 12 illustrate an example of operation in which one communication apparatus 10 converts the low-speed packet received from one processing unit 2 into N high-speed packets and transmits the N high-speed packets to another communication apparatus 10, and another communication apparatus 10 restores the original low-speed packet based on the N received high-speed packets and transmits the restored low-speed packet to another processing unit 2. In the following, the communication apparatus 10 that converts the original low-speed packet into N high-speed packets is referred to as a converting-side communication apparatus 10, and the communication apparatus 10 that restores the original low-speed packet is referred to as a restoring-side communication apparatus 10. In the present example, when the communication apparatus 10A functions as the converting-side communication apparatus 10, the communication apparatus 10B functions as the restoring-side communication apparatus 10. On the other hand, when the communication apparatus 10B functions as the converting-side communication apparatus 10, the communication apparatus 10A functions as the restoring-side communication apparatus 10.

In the example of FIGS. 10 to 12, the data length of the low-speed packet is 320 bits (i.e., A = 32), the second transmission rate of the low-speed packet (i.e., the low-speed transmission rate) is 1 Mbps, the number of bits of the first bit group to be transmitted is 256 bits, and the basic number of bits of the second bit group is 30 bits. In the example of FIGS. 10 to 12, the first transmission rate of the high-speed packet (i.e., the high-speed transmission rate) is 120 Mbps, and the number of bits of the data main body 100 is 512 bits. In the example of FIGS. 10 to 12, the number of bits of the last second bit group is 16 bits. In FIGS. 10 to 12, an a-th (a is an integer from 1 to A) block BL from the start of the low-speed packet is represented by "block a".

In the converting-side communication apparatus 10, when the interface 12 starts to receive the low-speed packet, as illustrated in FIG. 10, in step s1, the generation unit 20 generates the transmission rate information 113 based on the low-speed-side header 205. Then, in step s2, the generation unit 20 generates the data length information 114, based on the ID code included in the low-speed-side header 205. When the generation unit 20 generates the transmission rate information 113 and the data length information 114 based on the low-speed-side header 205, in step s3, the generation unit 20 generates the start header 110a. After the start header 110a is generated and when 30 bits constituting the start second bit group are output from the buffer 23, in step s4, the data main body generation unit 26 adds the start header 110a to the start second bit group. Subsequently, in step s5, the data main body generation unit 26 generates the start data main body 100a including the start second bit group to which the start header 110a is added. In the generation unit 20, the start header 110a is generated before completion of output of the start second bit group from the buffer 23.

When the start data main body 100a is generated, the packet generation unit 27 generates the high-speed packet including the start data main body 100a and outputs the high-speed packet to the interface 13. In step s6, the interface 13 transmits the high-speed packet (also referred to as a start high-speed packet) including the start data main body 100a.

After step s6, in the restoring-side communication apparatus 10, when the interface 13 receives the start high-speed packet, the restoration unit 30 starts to restore the original low-speed packet, based on the start high-speed packet. When restoration of the low-speed packet is started, in step s7, the interface 12 starts to transmit the restored low-speed packet.

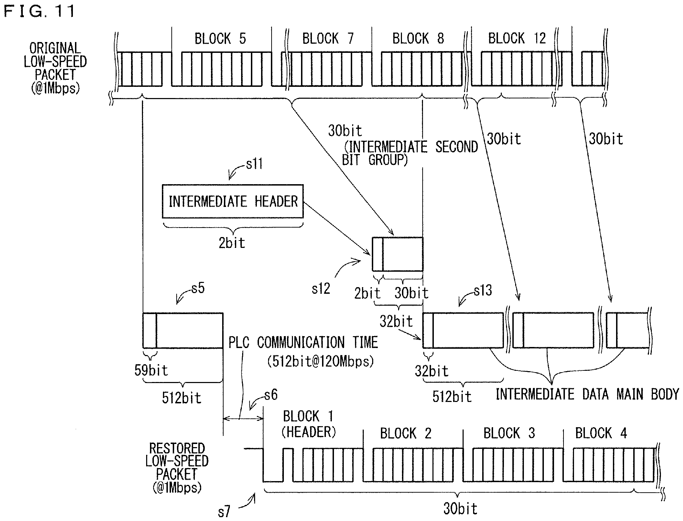

In the converting-side communication apparatus 10, when reception of the start second bit group completes, as illustrated in FIG. 10 and FIG. 11, in step s11, the generation unit 20 generates the intermediate header 110b. After the intermediate header 110b is generated and when 30 bits constituting the intermediate second bit group are output from the buffer 23, as illustrated in FIG. 11, in step s12, the data main body generation unit 26 adds the intermediate header 110b to the intermediate second bit group. Subsequently, in step s13, the data main body generation unit 26 generates the intermediate data main body 100b including the intermediate second bit group to which the intermediate header 110b is added. In the generation unit 20, the intermediate header 110b is generated before completion of output of the intermediate second bit group from the buffer 23.

When the intermediate data main body 100b is generated, the packet generation unit 27 generates the high-speed packet including the intermediate data main body 100b and outputs the high-speed packet to the interface 13. The interface 13 transmits the high-speed packet (also referred to as an intermediate high-speed packet) including the intermediate data main body 100b. Thereafter, the converting-side communication apparatus 10 operates in a similar manner and sequentially transmits (N-2) intermediate high-speed packets.

When the restoring-side communication apparatus 10 receives the intermediate high-speed packet, the restoring-side communication apparatus 10 continues to restore the low-speed packet based on the received intermediate high-speed packet, and continues to transmit the restored low-speed packet (see FIG. 11).

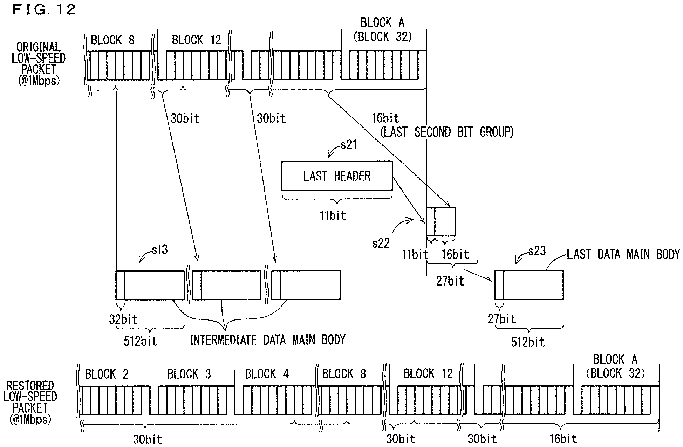

In the converting-side communication apparatus 10, when reception of an (N-2)-th intermediate second bit group completes, as illustrated in FIG. 12, in step s21, the generation unit 20 generates the last header 110c. After the last header 110c is generated and when 16 bits constituting the last second bit group are output from the buffer 23, in step s22, the data main body generation unit 26 adds the last header 110c to the last second bit group. Subsequently, in step s23, the data main body generation unit 26 generates the last data main body 100c including the last second bit group to which the last header 110c is added. In the generation unit 20, the last header 110c is generated before completion of output of the last second bit group from the buffer 23.

When the last data main body 100c is generated, the packet generation unit 27 generates the high-speed packet including the last data main body 100c and outputs the high-speed packet to the interface 13. The interface 13 transmits the high-speed packet (also referred to as a last high-speed packet) including the last data main body 100c.

When the restoring-side communication apparatus 10 receives the last high-speed packet, the restoring-side communication apparatus 10 continues to restore the low-speed packet based on the received last high-speed packet, and continues to transmit the restored low-speed packet (see FIG. 12). After reception of the last high-speed packet completes in the restoring-side communication apparatus 10 and a certain time has elapsed thereafter, transmission of the restored low-speed packet from the restoring-side communication apparatus 10 completes.

As described above, in the converting-side communication apparatus 10 of the present example, each time the interface 12 receives the second bit group having the number of bits smaller than the number of data main body bits out of first bit group to be transmitted included in the low-speed packet, the generation unit 20 sequentially generates the high-speed packet including the data main body 100 including the high-speed-side header and the second bit group. Then, each time the generation unit 20 generates the high-speed packet, the interface 13 sequentially transmits the high-speed packet.

In this manner, each time the converting-side communication apparatus 10 receives the second bit group of the low-speed packet, the converting-side communication apparatus 10 transmits the high-speed packet including the data main body 100 including the second bit group.

In contrast, when the communication apparatus that receives the low-speed packet receives all of the plurality of bits (i.e., all of the A blocks BL) constituting the low-speed packet and then starts to transmit the high-speed packet, latency from when the communication apparatus starts to receive the low-speed packet to when the communication apparatus starts to transmit the high-speed packet increases.

In the present example, each time the converting-side communication apparatus 10 receives the second bit group being a part of the low-speed packet, the converting-side communication apparatus 10 transmits the high-speed packet including the data main body 100 including the second bit group, and therefore latency (also referred to as first latency) from when the converting-side communication apparatus 10 starts to receive the low-speed packet to when the converting-side communication apparatus 10 starts to transmit the high-speed packet can be reduced.

In the restoring-side communication apparatus 10 of the present example, the restoration unit 30 generates the restored low-speed packet obtained by restoring the original low-speed packet, based on the high-speed packet sequentially received by the interface 13 from the converting-side communication apparatus 10, and the interface 12 transmits the restored low-speed packet. Consequently, latency Da (see FIG. 10) from when the converting-side communication apparatus 10 starts to receive the original low-speed packet to when the restoring-side communication apparatus 10 starts to transmit the restored low-speed packet obtained by restoring the original low-speed packet can be reduced. In other words, latency Da from when the communication system 5 that relays the low-speed packet between one processing unit 2 and another processing unit 2 starts to receive the low-speed packet from one processing unit 2 to when the communication system 5 starts to transmit the low-speed packet to another processing unit 2 can be reduced. In the following, the latency Da may be referred to as second latency Da.

In the converting-side communication apparatus 10 of the present example, the generation unit 20 acquires the low-speed transmission rate of the low-speed packet, and generates the start data main body 100a including the start header 110a including the transmission rate information 113 indicating the acquired low-speed transmission rate and the start second bit group. Consequently, the restoring-side communication apparatus 10 that receives the high-speed packet including the start data main body 100a can simply identify the low-speed transmission rate of the original low-speed packet, based on the transmission rate information 113 included in the start data main body 100a.

In the present example, the generation unit 20 acquires the data length of the low-speed packet, and generates the start data main body 100a including the start header 110a including the data length information 114 indicating the acquired data length and the start second bit group. Consequently, the restoring-side communication apparatus 10 that receives the high-speed packet including the start data main body 100a can simply identify the data length of the original low-speed packet, based on the data length information 114 included in the start data main body 100a.

In the present example, the generation unit 20 generates the last data main body 100c including the last header 110c including the number of bits identification information 115 for identifying the number of bits of the last second bit group and the last second bit group. Consequently, the restoring-side communication apparatus 10 that receives the high-speed packet including the last data main body 100c can simply identify the number of bits of the last second bit group included in the last data main body 100c, based on the number of bits identification information 115 included in the last data main body 100c.

<Basic Number of Bits of Second Bit Group>

The first transmission rate of the high-speed packet (i.e., the high-speed transmission rate) is represented by R1, and the second transmission rate of the low-speed packet (i.e., the low-speed transmission rate) is represented by R2. The data length of the high-speed packet (also referred to as a high-speed packet length) is represented by L1, and the data length of the data main body 100 (i.e., the number of data main body bits) included in the high-speed packet is represented by L1e. The low-speed packet length is represented by L2, and the basic number of bits of the second bit group is represented by L2d.

A substantial transmission rate R1e of the data main body 100 included in the high-speed packet can be expressed by the following expression (4). The transmission rate R1e may be referred to as an effective transmission rate of the high-speed packet. In the following, the transmission rate R1e may be referred to as an effective high-speed transmission rate R1e. Note that the transmission rate can be regarded as a communication band.

[Expression 4]

$$R1e = R1 \times L1e/L1 \qquad \cdots (4)$$

In the present example, only a part of the data main body 100 constitutes the second bit group, and accordingly transmission efficiency E is expressed by the following expression (5).

[Expression 5]

$$E = L2d/L1e \quad \cdots (5)$$

Thus, a substantial transmission rate R3 (also referred to as a second bit group transmission rate R3) for transmitting the second bit group in the high-speed packet is expressed by the following expression (6).

[Expression 6]

$$R3 = R1e \times E \quad \cdots (6)$$

As can be understood from expression (5) and expression (6), by increasing the basic number L2d of bits of the second bit group, the second bit group transmission rate R3 can be increased.

On the other hand, when the basic number L2d of bits of the second bit group increases, time from when the converting-side communication apparatus 10 starts to receive the low-speed packet to when the converting-side communication apparatus 10 finishes receiving the start second bit group increases, and accordingly the first latency increases.

In view of this, in order that the second bit group transmission rate R3 not be excessively reduced with the first latency being kept reduced, the basic number L2d of bits of the second bit group may be set so that the second bit group transmission rate R3 matches the low-speed transmission rate R2. In other words, the basic number L2d of bits may be determined, using the following expression (7).

[Expression 7]

$$L2d = L1e \times R2/R1e \qquad \cdots (7)$$

Note that, when the value acquired in expression (7) is not an integer, for example, a value in the first decimal place of the value acquired in expression (7) may be rounded off or truncated in such a manner that the value acquired in expression (7) may be rounded to an integer.

It can be said that the basic number L2d of bits acquired based on expression (7) is a value based on the number L1e of data main body bits, the substantial transmission rate R1e of the data main body 100, and the low-speed transmission rate R2.

An approximate value of the second latency Da, that is, an approximate value of the latency from when the converting-side communication apparatus 10 starts to receive the original low-speed packet to when the restoring-side communication apparatus 10 starts to transmit the restored low-speed packet obtained by restoring the original low-speed packet can be expressed by the following expression (8).

[Expression 8]

$$Da = 1/R2 \times L2d + 1/R1 \times L1 \qquad \cdots (8)$$

For example, it is assumed that the high-speed transmission rate R1 is 120 Mbps, the effective high-speed transmission rate R1e is 40 Mbps, the low-speed transmission rate R2 is 1 Mbps, the number L1e of data main body bits is 512 bits, the high-speed packet length L1 is 1536 bits, and the low-speed packet length L2 is 320 bits. In this case, the basic number L2d of bits acquired in expression (7) is 12.8 bits. When the value acquired in expression (7) is directly used as the value of the basic number L2d of bits in expression (8), the approximate value of the second latency Da is 25.6 $\mu$s.

In the communication system 5, the basic number L2d of bits predetermined based on expression (7) may be used. Alternatively, the generation unit 20 may acquire the basic number L2d of bits, based on expression (7). In other words, the generation unit 20 may determine the basic number L2d of bits, based on the number L1e of data main body bits, the substantial transmission rate R1e of the data main body 100, and the low-speed transmission rate R2.

When the generation unit 20 determines the basic number L2d of bits, basic number of bits information indicating the determined basic number L2d of bits may be included in the start header 110a. Consequently, the restoring-side communication apparatus 10 can identify the basic number L2d of bits, based on the basic number of bits information included in the received start header 110a.

In the above example, the number of bits identification information 115 is included in the last header 110c, but the number of bits identification information 115 need not be included therein. In this case, in the restoring-side communication apparatus 10, the data main body processing unit 32 can identify the number of bits of the last second bit group, based on the number of bits of the second bit group other than the last second bit group already received by the interface 13 and the low-speed packet length. In other words, the data main body processing unit 32 can identify the number of bits of the last second bit group, based on the total number of bits of the start second bit group and (N-2) intermediate second bit groups thus far received by the interface 13 and the low-speed packet length. In still other words, the data main body processing unit 32 can identify the number of bits of the last second bit group, based on the total number of bits of (N-1) second bit groups included in the start data main body 100a and (N-2) intermediate data main bodies 100b acquired in the data main body acquisition unit 31 and the low-speed packet length. For example, a case is considered in which the low-speed packet length is 320 bits and the total number of bits of the start second bit group and the intermediate second bit groups received by the interface 13 is 240 bits. In this case, the number of bits of the first bit group to be transmitted is 256 bits, and accordingly the number of bits of the last second bit group is 16 bits.

In the communication apparatus 10A and the communication apparatus 10B, when whether the transmission rate information 113 includes the value of the low-speed transmission rate or includes the identification information of the low-speed transmission rate is known, the format information 112 need not be included in the start header 110a.

In the communication apparatus 10A and the communication apparatus 10B, when the low-speed transmission rate is known, the generation unit 20 need not acquire the low-speed transmission rate. In this case, the transmission rate information 113 and the format information 112 need not be included in the start header 110a.

In the communication apparatus 10A and the communication apparatus 10B, when the low-speed packet length is known, the data length information 114 need not be included in the start header 110a.

In the restoring-side communication apparatus 10 in the above example, when writing of a bit into the buffer 33 starts, the reading controller 35 immediately starts to read bits from the buffer 33. On the other hand, due to variation in processing time in the converting-side communication apparatus 10, communication jitter between the converting-side communication apparatus 10 and the restoring-side communication apparatus 10, variation in processing time in the data main body acquisition unit 31 and the data main body processing unit 32 included in the restoring-side communication apparatus 10, and so on, a timing of writing of a bit into the buffer 33 may vary. A timing at which the reading controller 35 reads bits from the buffer 33 may vary. Thus, as in the above example, when the reading controller 35 immediately starts to read bits from the buffer 33 in response to starting of writing of a bit into the buffer 33, the restoring-side communication apparatus 10 may become unable to successively transmit each bit of the restored low-speed packet. In other words, transmission of the restored low-speed packet from the restoring-side communication apparatus 10 may be interrupted.

In view of this, the reading controller 35 may start to read bits from the buffer 33 after a certain number of bits have been written into the buffer 33. In other words, when the number of bits written into the buffer 33 exceeds a threshold, the reading controller 35 may start to read bits from the buffer 33. Consequently, transmission of the restored low-speed packet from the restoring-side communication apparatus 10 can be made less likely to be interrupted. By monitoring the writing pointer output by the writing controller 34, the reading controller 35 can identify the number of bits written into the buffer 33.

The threshold used in the reading controller 35 is set so that transmission of the restored low-speed packet from the restoring-side communication apparatus 10 is not interrupted even when the variation and the jitter reach the worst values. The threshold may be set based on operation results obtained after causing the communication system 5 to experimentally actually operate in advance, or may be set based on simulation results of operation of the communication system 5.

In the above example, in the data main body 100, the remaining area (also referred to as a residual area) other than the high-speed-side header and the second bit groups is unused; however, the remaining area may be used to enhance error tolerance in the high-speed-side header and the second bit groups, for example. The following will describe a plurality of examples of use methods for the residual area.

<First Use Method>

<Operation Example of Converting-Side Communication Apparatus>

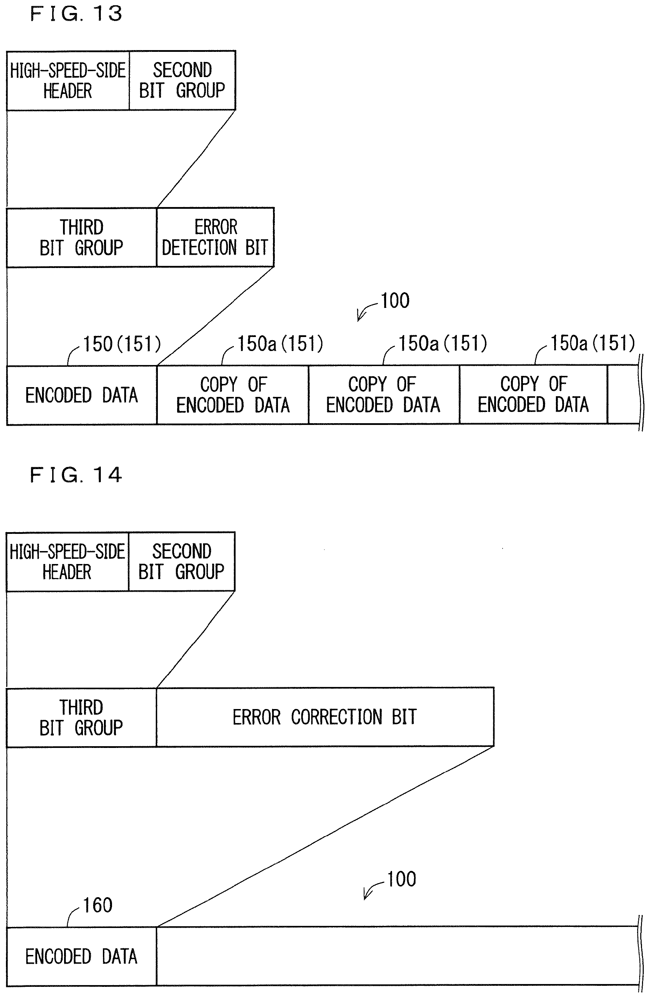

FIG. 13 is a schematic diagram for illustrating an example of operation of the generation unit 20 of the converting-side communication apparatus 10. In the first use method, as illustrated in FIG. 13, the data main body generation unit 26 of the generation unit 20 generates encoded data 150 including a third bit group including the high-speed-side header and the second bit group and error detection bits. Then, the data main body generation unit 26 generates the data main body 100 including the encoded data 150 and at least one copy 150a of the encoded data 150. The error detection bits included in the encoded data 150 may be error detection bits based on CRC, for example. "CRC" is an abbreviation for "Cyclic Redundancy Check". The error detection bits are also referred to as redundant bits.

The encoded data 150 and the copy 150a are the same data. In the following, when the encoded data 150 and the copy 150a need not be distinguished from each other, each of the encoded data 150 and the copy 150a is referred to as encoded data 151. The data main body 100 includes a plurality of pieces of encoded data 151 including the encoded data 150 and at least one copy 150a of the encoded data 150. The data main body 100 includes at least two pieces of encoded data 151.

The data main body 100 may include one copy 150a, or may include a plurality of copies 150a. A maximum number of pieces of encoded data 151 that can be included in the data main body 100 may be generated. For example, a case is considered in which the number of bits of the data main body 100 is 512 bits, the number of bits of the third bit group is 56 bits, and the number of bits of the error detection bits is 8 bits. In this case, the number of bits of the encoded data 151 is 64 bits, and the maximum number of pieces of encoded data 151 that can be included in the data main body 100 is 8.

When the number of bits of the data main body 100 is larger than the total number of bits of the plurality of pieces of encoded data 151 included in the data main body 100, the value of each bit other than the plurality of pieces of encoded data 151 out of the data main body 100 may be any value. For example, such each bit may be unfixed, or may be a dummy fixed value.

<Operation Example of Decoding-Side Communication Apparatus>

The restoration unit 30 includes the second bit group included in the encoded data 151 without a detected error out of the plurality of pieces of encoded data 151 included in the data main body 100 in the restored low-speed packet. Specifically, the data main body processing unit 32 of the restoration unit 30 performs error detection (for example, error detection based on CRC) on each piece of encoded data 151 included in the data main body 100. Then, the data main body processing unit 32 performs necessary processing based on the high-speed-side header included in the encoded data 151 without a detected error out of the plurality of pieces of encoded data 151 included in the data main body 100. The data main body processing unit 32 outputs each bit of the second bit group included in the encoded data 151 without a detected error to the buffer 33. Consequently, the second bit group included in the encoded data 151 without a detected error can be included in the restored low-speed packet generated by the packet generation unit 36.

Note that, when an error is detected in all of the plurality of pieces of encoded data 151 included in the data main body 100, the data main body processing unit 32 may perform necessary processing based on the high-speed-side header included in any one piece of encoded data 151 of the plurality of pieces of encoded data 151. The data main body processing unit 32 may output the second bit group included in any one piece of encoded data 151 of the plurality of pieces of encoded data 151 to the buffer 33. When an error is detected in all of the plurality of pieces of encoded data 151 included in the data main body 100 included in the high-speed packet, the data main body processing unit 32 ignores the high-speed packet, and an upper system side performs timeout processing.

<Second Use Method>

<Operation Example of Converting-Side Communication Apparatus>

FIG. 14 is a schematic diagram for illustrating an example of operation of the generation unit 20 of the converting-side communication apparatus 10. In the second use method, as illustrated in FIG. 14, the data main body generation unit 26 of the generation unit 20 performs error correction encoding on the third bit group including the high-speed-side header and the second bit group, and generates encoded data 160 including the third bit group and the error correction bits. Then, the data main body generation unit 26 generates the data main body 100 including the encoded data 160.

The error correction bits included in the encoded data 160 may be error correction bits based on BCH encoding, for example. In this case, it can also be said that the data main body generation unit 26 performs BCH encoding on the third bit group and generates the encoded data 160. In this case, it can also be said that the encoded data 160 is BCH codes. Note that the error correction bits included in the encoded data 160 may be error correction bits based on Reed-Solomon encoding, or may be error correction bits based on LDPC encoding, for example. "LDPC" is an abbreviation for "Low Density Parity Check".

When the number of bits of the data main body 100 is larger than the number of bits of the encoded data 160 included in the data main body 100, the value of each bit other than the encoded data 160 out of the data main body 100 may be any value. For example, such each bit may be unfixed, or may be a dummy fixed value.

<Operation Example of Decoding-Side Communication Apparatus>

The data main body processing unit 32 of the restoration unit 30 performs error correction on the encoded data 160 included in the data main body 100. Then, the data main body processing unit 32 performs necessary processing based on the high-speed-side header included in the error-corrected encoded data 160. The data main body processing unit 32 outputs each bit of the second bit group included in the error-corrected encoded data 160 to the buffer 33. Consequently, the second bit group included in the error-corrected encoded data 160 can be included in the restored low-speed packet generated by the packet generation unit 36.

Note that, when error correction on the encoded data 160 fails, the data main body processing unit 32 may perform necessary processing based on the high-speed-side header included in the unsuccessfully error-corrected encoded data 160. The data main body processing unit 32 may output the second bit group included in the unsuccessfully error-corrected encoded data 160 to the buffer 33.

<Third Use Method>

<Operation Example of Converting-Side Communication Apparatus>

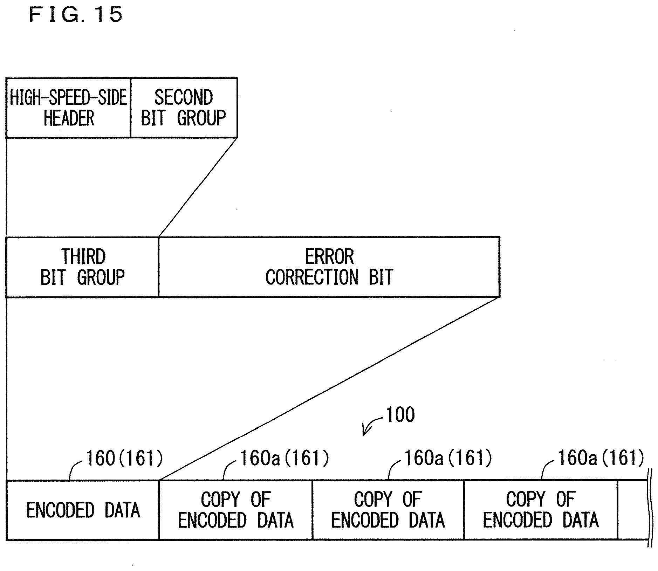

FIG. 15 is a schematic diagram for illustrating an example of operation of the generation unit 20 of the converting-side communication apparatus 10. In the third use method, as illustrated in FIG. 15, the data main body generation unit 26 generates the data main body 100 including the above-described encoded data 160 and at least one copy 160a of the encoded data 160.

The encoded data 160 and the copy 160a are the same data. In the following, when the encoded data 160 and the copy 160a need not be distinguished from each other, each of the encoded data 160 and the copy 160a is referred to as encoded data 161. The data main body 100 includes a plurality of pieces of encoded data 161 including the encoded data 160 and at least one copy 160a of the encoded data 160. The data main body 100 includes at least two pieces of encoded data 161.

The data main body 100 may include one copy 160a, or may include a plurality of copies 160a. A maximum number of pieces of encoded data 161 that can be included in the data main body 100 may be generated. For example, when the number of bits of the data main body 100 is 512 bits and the number of bits of the encoded data 161 is 127 bits, the maximum number of pieces of encoded data 161 that can be included in the data main body 100 is 4.

When the number of bits of the data main body 100 is larger than the total number of bits of the plurality of pieces of encoded data 161 included in the data main body 100, the value of each bit other than the plurality of pieces of encoded data 161 out of the data main body 100 may be any value. For example, such each bit may be unfixed, or may be a dummy fixed value.

<Operation Example of Decoding-Side Communication Apparatus>

The restoration unit 30 includes the second bit group included in the successfully error-corrected encoded data 161 out of the plurality of pieces of encoded data 161 included in the data main body 100 in the restored low-speed packet. Specifically, the data main body processing unit 32 of the restoration unit 30 performs error correction on each piece of encoded data 161 included in the data main body 100. Then, the data main body processing unit 32 performs necessary processing based on the high-speed-side header included in the successfully error-corrected encoded data 161 out of the plurality of pieces of encoded data 161 included in the data main body 100. The data main body processing unit 32 outputs each bit of the second bit group included in the successfully error-corrected encoded data 161 to the buffer 33. Consequently, the second bit group included in the error-corrected encoded data 161 can be included in the restored low-speed packet generated by the packet generation unit 36.

Note that, when none of the plurality of pieces of encoded data 161 included in the data main body 100 is successfully error-corrected, the data main body processing unit 32 may perform necessary processing based on the high-speed-side header included in any one piece of encoded data 161 of the plurality of pieces of encoded data 161. The data main body processing unit 32 may output the second bit group included in any one piece of encoded data 161 of the plurality of pieces of encoded data 161 to the buffer 33.

<Fourth Use Method>

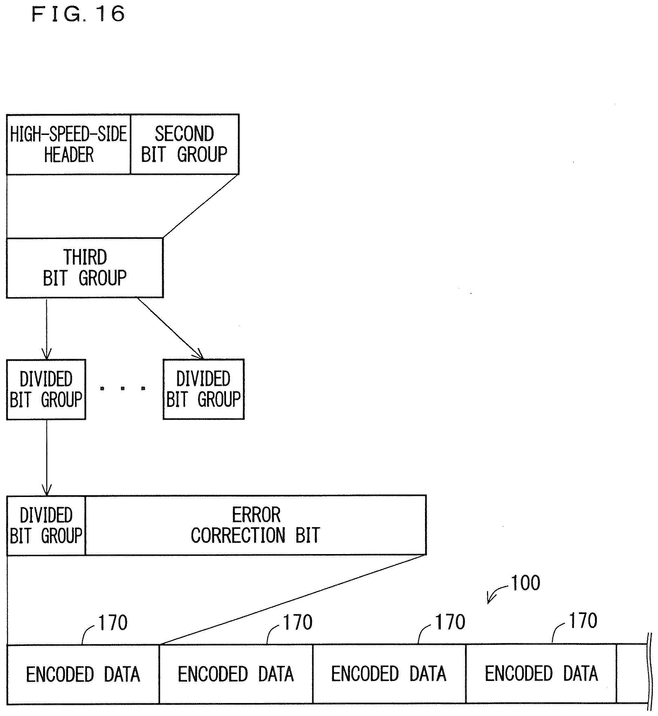

FIG. 16 is a schematic diagram for illustrating an example of operation of the generation unit 20 of the converting-side communication apparatus 10. In the fourth use method, as illustrated in FIG. 15, the data main body generation unit 26 of the generation unit 20 divides the third bit group including the high-speed-side header and the second bit group into Q (Q is an integer of 2 or greater) divided bit groups. Next, the data main body generation unit 26 performs error correction encoding on each of the Q divided bit groups, and generates Q pieces of encoded data 170 that respectively include the Q divided bit groups and each include error correction bits. Then, the data main body generation unit 26 generates the data main body 100 including the Q pieces of encoded data 170.

The error correction bits included in the encoded data 170 may be error correction bits based on BCH encoding, for example. In this case, it can also be said that the data main body generation unit 26 performs BCH encoding on the divided bit groups and generates the encoded data 170. Note that the error correction bits included in the encoded data 170 may be error correction bits based on Reed-Solomon encoding, or may be error correction bits based on LDPC encoding, for example.

The value of Q may be "2", or may be "3" or greater. In other words, two pieces of encoded data 170 may be generated, or three or more pieces of encoded data 170 may be generated. A maximum number of pieces of encoded data 170 that can be included in the data main body 100 may be generated. For example, when the number of bits of the data main body 100 is 512 bits and the number of bits of the encoded data 170 is 127 bits, the maximum number of pieces of encoded data 170 that can be included in the data main body 100 is 4.

When the number of bits of the data main body 100 is larger than the total number of bits of the Q pieces of encoded data 170 included in the data main body 100, the value of each bit other than the Q pieces of encoded data 170 out of the data main body 100 may be any value. For example, such each bit may be unfixed, or may be a dummy fixed value.

<Operation Example of Decoding-Side Communication Apparatus>

The data main body processing unit 32 of the restoration unit 30 performs error correction on each piece of encoded data 170 included in the data main body 100. Then, the data main body processing unit 32 acquires the divided bit groups respectively corresponding to the pieces of encoded data 170 included in the data main body 100. In this case, for the successfully error-corrected encoded data, the data main body processing unit 32 acquires the divided bit groups from the error-corrected encoded data. When the unsuccessfully error-corrected encoded data is present, the data main body processing unit 32 also acquires the divided bit groups from the unsuccessfully error-corrected encoded data. Then, the data main body processing unit 32 generates (i.e., restores) the third bit group, based on the Q acquired divided bit groups. Subsequently, the data main body processing unit 32 performs necessary processing based on the high-speed-side header included in the generated third bit group. The data main body processing unit 32 outputs each bit of the second bit group included in the generated third bit group to the buffer 33.

As in the first use method, the second use method, the third use method, and the fourth use method described above, the residual area in the data main body 100 can be effectively used, and error tolerance in communication data can be enhanced.

The number of bits of the data main body 100 need not be constantly fixed and may be variable during operation of the communication system 5. For example, the communication system 5 may have a plurality of operation modes in which the numbers of data main body bits are different from each other.

During a period in which the communication system 5 operates, there may be a period in which the number of bits of the third bit group including the high-speed-side header and the second bit group and the number of bits of the data main body 100 match each other.

In the above example, the number of bits (for example, 59 bits (see FIG. 10)) of the third bit group included in the start data main body 100a and the number of bits (for example, 32 bits (see FIG. 11)) of the third bit group included in the intermediate data main body 100b are different from each other, but may be the same as each other. For example, each of the number of bits of the third bit group included in the start data main body 100a and the number of bits of the third bit group included in the intermediate data main body 100b may be 64 bits, for example. In this case, the number of bits of the second bit group included in the start data main body 100a is 35 bits, and the number of bits of the second bit group included in the intermediate data main body 100b is 62 bits.

In the above example, the first bit group to be transmitted included in the low-speed packet is a data bit string included in A blocks BL, but may be all of the A blocks BL. In other words, the first bit group may include the start bit and the stop bit of each block BL.

In the above example, the communication apparatus 10A is implemented by a hardware circuit that does not require software to implement its functions; however, all of the functions of the communication apparatus 10A or a part of the functions of the communication apparatus 10A may be functions implemented by a processor such as a central processing unit (CPU) executing software (i.e., a program) in memory. For example, all of the functions of the generation unit 20A or a part of the functions of the generation unit 20A may be functions implemented by a processor executing software, and all of the functions of the restoration unit 30A or a part of the functions of the restoration unit 30A may be functions implemented by a processor executing software. Similarly, all of the functions of the communication apparatus 10B or a part of the functions of the communication apparatus 10B may be functions implemented by a processor executing software.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

As described above, while the communication system has been described in detail, the foregoing description is in all aspects illustrative, and the present disclosure is not limited thereto. Various examples described above can be applied in combination, on the condition that the combination is consistent. It is therefore understood that numerous unillustrated modifications can be devised without departing from the scope of the present disclosure.

The present disclosure includes the following aspects.

A first communication apparatus according to a first aspect is a first communication apparatus configured to transmit a first packet at a first transmission rate. The first communication apparatus includes: a first interface configured to receive a second packet transmitted at a second transmission rate lower than the first transmission rate; a generation unit configured to, each time the first interface receives a second bit group having number of bits smaller than the number of bits of a data main body that can be included in the first packet out of a first bit group to be transmitted included in the second packet, sequentially generate the first packet including the data main body including the second bit group; and a second interface configured to, each time the generation unit generates the first packet, sequentially transmit the first packet.

A first communication apparatus according to a second aspect is the first communication apparatus according to the first aspect. The generation unit acquires the second transmission rate, based on a second header included in the second packet. The generation unit generates the data main body including a first header including transmission rate information indicating the second transmission rate and the second bit group first transmitted from the second interface out of the first bit group.

A first communication apparatus according to a third aspect is the first communication apparatus according to the first or second aspect. The generation unit acquires a data length of the second packet, based on a second header included in the second packet. The generation unit generates the data main body including a first header including data length information indicating the data length and the second bit group first transmitted from the second interface out of the first bit group.

A first communication apparatus according to a fourth aspect is the first communication apparatus according to any one of the first to third aspects. The generation unit generates the data main body including a first header including number of bits identification information for identifying the number of bits of the second bit group last transmitted from the second interface out of the first bit group and the second bit group last transmitted from the second interface out of the first bit group.

A first communication apparatus according to a fifth aspect is the first communication apparatus according to any one of the first to fourth aspects. The generation unit generates the data main body including a plurality of pieces of second encoded data including first encoded data including a third bit group including a first header and the second bit group and an error detection bit and at least one copy of the first encoded data.

A first communication apparatus according to a sixth aspect is the first communication apparatus according to any one of the first to fourth aspects. The generation unit generates the data main body including first encoded data including a third bit group including a first header and the second bit group and an error correction bit.

A first communication apparatus according to a seventh aspect is the first communication apparatus according to the sixth aspect. The generation unit generates the data main body including a plurality of pieces of second encoded data including the first encoded data and at least one copy of the first encoded data.

A first communication apparatus according to an eighth aspect is the first communication apparatus according to any one of the first to fourth aspects. The generation unit divides a third bit group including a first header and the second bit group into a plurality of divided bit groups. The generation unit generates a plurality of pieces of encoded data respectively including the plurality of divided bit groups and each including an error correction bit. The generation unit generates the data main body including the plurality of pieces of encoded data.

A first communication apparatus according to a ninth aspect is the first communication apparatus according to any one of the first to eighth aspects. The number of bits of the second bit group is based on the number of bits of the data main body, a substantial transmission rate of the data main body, and the second transmission rate.

A first communication apparatus according to a tenth aspect is the first communication apparatus according to the ninth aspect. The generation unit determines the number of bits of the second bit group, based on the number of bits of the data main body, the substantial transmission rate of the data main body, and the second transmission rate.

A second communication apparatus according to an eleventh aspect includes: a third interface configured to receive the first packet sequentially transmitted by the first communication apparatus according to any one of the first to tenth aspects; a restoration unit configured to generate a restored second packet obtained by restoring the second packet, based on the first packet sequentially received by the third interface; and a fourth interface configured to transmit the restored second packet.

A second communication apparatus according to a twelfth aspect is the second communication apparatus according to the eleventh aspect. The restoration unit includes a buffer into which the second bit group included in the first packet sequentially received by the third interface is sequentially written, and when the number of bits written into the buffer exceeds a threshold, the restoration unit starts to read the bits from the buffer.

A second communication apparatus according to a thirteenth aspect is the second communication apparatus according to the eleventh or twelfth aspect. The restoration unit identifies the number of bits of a last second bit group being the second bit group last received by the third interface out of the first bit group, based on the number of bits of the second bit group other than the last second bit group received by the third interface in the first bit group and a data length of the second packet.

A second communication apparatus according to a fourteenth aspect includes: a third interface configured to receive the first packet sequentially transmitted by the first communication apparatus according to the fifth aspect; a restoration unit configured to generate a restored second packet obtained by restoring the second packet, based on the first packet sequentially received by the third interface; and a fourth interface configured to transmit the restored second packet. The restoration unit includes the second bit group included in the second encoded data without a detected error out of the plurality of pieces of the second encoded data included in the data main body received by the third interface in the restored second packet.

A second communication apparatus according to a fifteenth aspect includes: a third interface configured to receive the first packet sequentially transmitted by the first communication apparatus according to the sixth aspect; a restoration unit configured to generate a restored second packet obtained by restoring the second packet, based on the first packet sequentially received by the third interface; and a fourth interface configured to transmit the restored second packet. The restoration unit performs error correction on the first encoded data included in the data main body received by the third interface.

A second communication apparatus according to a sixteenth aspect includes: a third interface configured to receive the first packet sequentially transmitted by the first communication apparatus according to the seventh aspect; a restoration unit configured to generate a restored second packet obtained by restoring the second packet, based on the first packet sequentially received by the third interface; and a fourth interface configured to transmit the restored second packet. The restoration unit includes the second bit group included in the second encoded data being successfully error-corrected out of the plurality of pieces of the second encoded data included in the data main body received by the third interface in the restored second packet.

A second communication apparatus according to a seventeenth aspect includes: a third interface configured to receive the first packet sequentially transmitted by the first communication apparatus according to the eighth aspect; a restoration unit configured to generate a restored second packet obtained by restoring the second packet, based on the first packet sequentially received by the third interface; and a fourth interface configured to transmit the restored second packet. The restoration unit performs error correction on each of the plurality of pieces of the encoded data included in the data main body received by the third interface.

A communication system according to an eighteenth aspect includes: the first communication apparatus according to any one of the first to tenth aspects; and the second communication apparatus according to any one of the eleventh to thirteenth aspects.

A communication system according to a nineteenth aspect includes: the first communication apparatus according to the fifth aspect; and the second communication apparatus according to the fourteenth aspect.

A communication system according to a twentieth aspect includes: the first communication apparatus according to the sixth aspect; and the second communication apparatus according to the fifteenth aspect.

A communication system according to a twenty-first aspect includes: the first communication apparatus according to the seventh aspect; and the second communication apparatus according to the sixteenth aspect.

A communication system according to a twenty-second aspect includes: the first communication apparatus according to the eighth aspect; and the second communication apparatus according to the seventeenth aspect.

**Claims**

1. A first communication apparatus (10, 10A, 10B) configured to transmit a first packet (PK1) at a first transmission rate, the first communication apparatus (10, 10A, 10B) comprising:

   a first interface (12, 12A, 12B) configured to receive a second packet (PK2) transmitted at a second transmission rate lower than the first transmission rate;
   a generation unit (20, 20A, 20B) configured to, each time the first interface (12, 12A, 12B) receives a second bit group having number of bits smaller than the number of bits of a data main body (100, 100a, 100b, 100c) that can be included in the first packet (PK1) out of a first bit group to be transmitted included in the second packet (PK2), sequentially generate the first packet (PK1) including the data main body (100, 100a, 100b, 100c) including the second bit group; and
   a second interface (13, 13A, 13B) configured to, each time the generation unit (20, 20A, 20B) generates the first packet (PK1), sequentially transmit the first packet (PK1).

2. The first communication apparatus (10, 10A, 10B) according to claim 1, wherein

   the generation unit (20, 20A, 20B) acquires the second transmission rate, based on a second header (205) included in the second packet (PK2), and
   the generation unit (20, 20A, 20B) generates the data main body (100a) including a first header (110a) including transmission rate information (113) indicating the second transmission rate and the second bit group first transmitted from the second interface (13, 13A, 13B) out of the first bit group.

3. The first communication apparatus (10, 10A, 10B) according to claim 1 or 2, wherein

   the generation unit (20, 20A, 20B) acquires a data length of the second packet (PK2), based on a second header (205) included in the second packet (PK2), and
   the generation unit (20, 20A, 20B) generates the data main body (100a) including a first header (110a) including data length information (114) indicating the data length and the second bit group first transmitted from the second interface (13, 13A, 13B) out of the first bit group.

4. The first communication apparatus (10, 10A, 10B) according to claim 1 or 2, wherein
   the generation unit (20, 20A, 20B) generates the data main body (100c) including a first header (110c) including number of bits identification information (115) for identifying the number of bits of the second bit group last transmitted from the second interface (13, 13A, 13B) out of the first bit group and the second bit group last transmitted from the second interface (13, 13A, 13B) out of the first bit group.

5. The first communication apparatus (10, 10A, 10B) according to claim 1 or 2, wherein
   the generation unit (20, 20A, 20B) generates the data main body (100, 100a, 100b, 100c) including a plurality of pieces of second encoded data (151) including first encoded data (150) including a third bit group including a first header (110a, 110b, 110c) and the second bit group and an error detection bit and at least one copy (150a) of the first encoded data (150).

6. The first communication apparatus (10, 10A, 10B) according to claim 1 or 2, wherein
the generation unit (20, 20A, 20B) generates the data main body (100, 100a, 100b, 100c) including first encoded data (160) including a third bit group including a first header (110a, 110b, 110c) and the second bit group and an error correction bit.

7. The first communication apparatus (10, 10A, 10B) according to claim 1 or 2, wherein

the generation unit (20, 20A, 20B) divides a third bit group including a first header (110a, 110b, 110c) and the second bit group into a plurality of divided bit groups,
the generation unit (20, 20A, 20B) generates a plurality of pieces of encoded data (170) respectively including the plurality of divided bit groups and each including an error correction bit, and
the generation unit (20, 20A, 20B) generates the data main body (100, 100a, 100b, 100c) including the plurality of pieces of encoded data (170).

8. The first communication apparatus (10, 10A, 10B) according to claim 1 or 2, wherein
the number of bits of the second bit group is based on the number of bits of the data main body (100, 100a, 100b, 100c), a substantial transmission rate of the data main body (100, 100a, 100b, 100c), and the second transmission rate.

9. A second communication apparatus (10, 10A, 10B) comprising:

a third interface (13, 13A, 13B) configured to receive the first packet (PK1) sequentially transmitted by the first communication apparatus (10, 10A, 10B) according to claim 1 or 2;
a restoration unit (30, 30A, 30B) configured to generate a restored second packet (PK2) obtained by restoring the second packet (PK2), based on the first packet (PK1) sequentially received by the third interface (13, 13A, 13B); and
a fourth interface (12, 12A, 12B) configured to transmit the restored second packet (PK2).

10. The second communication apparatus (10, 10A, 10B) according to claim 9, wherein
the restoration unit (30, 30A, 30B) includes a buffer (33) into which the second bit group included in the first packet (PK1) sequentially received by the third interface (13, 13A, 13B) is sequentially written, and when the number of bits written into the buffer (33) exceeds a threshold, the restoration unit (30, 30A, 30B) starts to read the bits from the buffer (33).

11. The second communication apparatus (10, 10A, 10B) according to claim 9, wherein
the restoration unit (30, 30A, 30B) identifies the number of bits of a last second bit group being the second bit group last received by the third interface (13, 13A, 13B) out of the first bit group, based on the number of bits of the second bit group other than the last second bit group received by the third interface (13, 13A, 13B) in the first bit group and a data length of the second packet (PK2).

12. A second communication apparatus (10, 10A, 10B) comprising:

a third interface (13, 13A, 13B) configured to receive the first packet (PK1) sequentially transmitted by the first communication apparatus (10, 10A, 10B) according to claim 5;
a restoration unit (30, 30A, 30B) configured to generate a restored second packet (PK2) obtained by restoring the second packet (PK2), based on the first packet (PK1) sequentially received by the third interface (13, 13A, 13B); and
a fourth interface (12, 12A, 12B) configured to transmit the restored second packet (PK2), wherein
the restoration unit (30, 30A, 30B) includes the second bit group included in the second encoded data (151) without a detected error out of the plurality of pieces of the second encoded data (151) included in the data main body (100, 100a, 100b, 100c) received by the third interface (13, 13A, 13B) in the restored second packet (PK2).

13. A second communication apparatus (10, 10A, 10B) comprising:

a third interface (13, 13A, 13B) configured to receive the first packet (PK1) sequentially transmitted by the first communication apparatus (10, 10A, 10B) according to claim 6;
a restoration unit (30, 30A, 30B) configured to generate a restored second packet (PK2) obtained by restoring the second packet (PK2), based on the first packet (PK1) sequentially received by the third interface (13, 13A, 13B); and

a fourth interface (12, 12A, 12B) configured to transmit the restored second packet (PK2), wherein the restoration unit (30, 30A, 30B) performs error correction on the first encoded data (160) included in the data main body (100, 100a, 100b, 100c) received by the third interface (13, 13A, 13B).

14. A second communication apparatus (10, 10A, 10B) comprising:

a third interface (13, 13A, 13B) configured to receive the first packet (PK1) sequentially transmitted by the first communication apparatus (10, 10A, 10B) according to claim 7;
a restoration unit (30, 30A, 30B) configured to generate a restored second packet (PK2) obtained by restoring the second packet (PK2), based on the first packet (PK1) sequentially received by the third interface (13, 13A, 13B); and
a fourth interface (12, 12A, 12B) configured to transmit the restored second packet (PK2), wherein the restoration unit (30, 30A, 30B) performs error correction on each of the plurality of pieces of the encoded data (170) included in the data main body (100, 100a, 100b, 100c) received by the third interface (13, 13A, 13B).

15. A communication system (5) comprising:

the first communication apparatus (10, 10A, 10B) according to claim 1 or 2; and
the second communication apparatus (10, 10A, 10B) according to claim 9.

FIG. 1

FIG. 2

5

F I G. 3

PK1

105

106 107 101 108

| PREAMBLE | SYNCWORD | DATA  AREA | POSTAMBLE |

PREDETERMINED
PROCESSING

DATA  MAIN  BODY — 100

FIG. 4

FIG. 5

```
                                           ┌─20
                              GENERATION UNIT

              ┌─24                      ┌─25
         ┌──────────┐              ┌──────────┐
         │ WRITING  │              │ READING  │
         │CONTROLLER│              │CONTROLLER│
         └──────────┘              └──────────┘
                          ┌─23
                       ┌────────┐
         ┌─21          │        │
     ┌────────────┐    │        │      ┌─26           ┌─27
     │  PACKET    │    │ BUFFER │  ┌──────────────┐┌──────────┐
     │PROCESSING  │    │        │  │ DATA MAIN BODY││ PACKET   │   HIGH-SPEED
     │  UNIT      │    │        │  │GENERATION UNIT││GENERATION│──▶  PACKET
     │     ┌─21a  │    └────────┘  └──────────────┘│  UNIT    │  (FIRST PACKET)
 LOW-SPEED│TRANSMISSION│                            └──────────┘
  PACKET  │   RATE     │
(SECOND   │ACQUISITION │              ┌─28
 PACKET)  │   UNIT     │          ┌──────────┐
     │    └────────────┘          │  HEADER  │
     │     ┌─21b  │               │GENERATION│
     │┌────────────┐              │   UNIT   │
     ││DATA LENGTH │              └──────────┘
     ││ACQUISITION │
     ││   UNIT     │
     │└────────────┘
     └────────────┘
```

FIG. 6

FIG. 7

<START DATA MAIN BODY>

| 1 X | FORMAT INFORMATION | TRANSMISSION RATE INFORMATION | DATA LENGTH INFORMATION | SECOND BIT GROUP |

111  112  113  114

110a  100a

<INTERMEDIATE DATA MAIN BODY>

110b  100b

| 0 0 | SECOND BIT GROUP |

111

<LAST DATA MAIN BODY>

110c  100c

| 0 1 | NUMBER OF BITS IDENTIFICATION INFORMATION | SECOND BIT GROUP |

111  115

FIG. 8

FIG. 9

FIG. 10

# FIG. 11

ORIGINAL LOW-SPEED PACKET (@1Mbps)

BLOCK 5   BLOCK 7   BLOCK 8   BLOCK 12

30bit (INTERMEDIATE SECOND BIT GROUP)

30bit   30bit

s11

INTERMEDIATE HEADER

2bit

s12   2bit   30bit

s13

s5

32bit

59bit

PLC COMMUNICATION TIME (512bit@120Mbps)

32bit

512bit

INTERMEDIATE DATA MAIN BODY

512bit

s6

RESTORED LOW-SPEED PACKET (@1Mbps)

BLOCK 1 (HEADER)   BLOCK 2   BLOCK 3   BLOCK 4

s7

30bit

FIG. 12

ORIGINAL
LOW-SPEED
PACKET
(@1Mbps)

BLOCK 8    BLOCK 12                    BLOCK A
                                      (BLOCK 32)

30bit       30bit       16bit
                        (LAST SECOND BIT GROUP)

s21

LAST HEADER

11bit

s13

s22

11bit   16bit

27bit

s23    LAST DATA MAIN BODY

32bit

512bit    INTERMEDIATE DATA MAIN BODY

27bit

512bit

RESTORED
LOW-SPEED
PACKET
(@1Mbps)

BLOCK 2    BLOCK 3    BLOCK 4    BLOCK 8    BLOCK 12              BLOCK A
                                                                (BLOCK 32)

30bit                             30bit    30bit    16bit

F I G. 13

| HIGH-SPEED-SIDE HEADER | SECOND BIT GROUP |
|---|---|

| THIRD BIT GROUP | ERROR DETECTION BIT |
|---|---|

100

| 150(151) ENCODED DATA | 150a(151) COPY OF ENCODED DATA | 150a(151) COPY OF ENCODED DATA | 150a(151) COPY OF ENCODED DATA | |
|---|---|---|---|---|

F I G. 14

| HIGH-SPEED-SIDE HEADER | SECOND BIT GROUP |
|---|---|

| THIRD BIT GROUP | ERROR CORRECTION BIT |
|---|---|

100

| 160 ENCODED DATA | |
|---|---|

F I G. 15

| HIGH-SPEED-SIDE HEADER | SECOND BIT GROUP |
|---|---|

| THIRD BIT GROUP | ERROR CORRECTION BIT |
|---|---|

⟋ 100

| 160(161) ENCODED DATA | 160a(161) COPY OF ENCODED DATA | 160a(161) COPY OF ENCODED DATA | 160a(161) COPY OF ENCODED DATA | |
|---|---|---|---|---|

FIG. 16

```
┌──────────────┬──────────────┐
│ HIGH-SPEED-SIDE │   SECOND    │
│    HEADER     │  BIT GROUP   │
└──────────────┴──────────────┘

        ┌──────────────────┐
        │      THIRD       │
        │    BIT GROUP     │
        └──────────────────┘

   ┌──────────┐         ┌──────────┐
   │ DIVIDED  │  . . .  │ DIVIDED  │
   │ BIT GROUP│         │ BIT GROUP│
   └──────────┘         └──────────┘

┌──────────┬────────────────────────────┐
│ DIVIDED  │          ERROR             │
│ BIT GROUP│      CORRECTION BIT        │
└──────────┴────────────────────────────┘
```

~100

~170            ~170           ~170           ~170

| ENCODED DATA | ENCODED DATA | ENCODED DATA | ENCODED DATA | |

Europäisches
Patentamt

European
Patent Office

Office européen
des brevets

# EUROPEAN SEARCH REPORT

**Application Number**

EP 25 16 2689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Itu-T: "GSTP-OVHN Overview of ITU-T G.hn technology", , 1 December 2021 (2021-12-01), XP093289390, Retrieved from the Internet: URL:https://www.itu.int/dms_pub/itu-t/opb/tut/T-TUT-HOME-2021-3-PDF-E.pdf | 1,5,6, 8-10,12, 13,15 | INV. H04B3/54 |
| A | * the whole document * | 2-4,7, 11,14 | |
| | ----- | | |
| X | Itu-T: "Unified high-speed wireline-based home networking transceivers - Data link layer specification", , 1 December 2023 (2023-12-01), XP093289213, Retrieved from the Internet: URL:https://www.itu.int/rec/T-REC-G.9961 | 1,5,6, 8-10,12, 13,15 | |
| A | * page 11 - page 26 * | 2-4,7, 11,14 | |
| | ----- | | |
| L | "Unified high-speed wireline-based home networking transceivers - System architecture and physical layer specification;G.9960R0", ITU-T DRAFT; STUDY PERIOD 2021-2024; STUDY GROUP 15; SERIES G.9960R0, INTERNATIONAL TELECOMMUNICATION UNION, GENEVA ; CH , vol. 3/15 25 December 2023 (2023-12-25), pages 1-224, XP044373887, Retrieved from the Internet: URL:https://www-api.itu.int/ifa/t/2022/sg15/exchange/wp1/q3/AAP/G.9960%20AMD1(2024)/G.9960%20(2023)%20Amd1%20LC%20text%20R0.pdf [retrieved on 2023-12-25] * paragraph [7.1.3.2] * | 1,6,9, 12-15 | **TECHNICAL FIELDS SEARCHED (IPC)** H04B |
| | ----- -/-- | | |

The present search report has been drawn up for all claims

| Place of search | Date of completion of the search | Examiner |
|---|---|---|
| The Hague | 24 June 2025 | D'Alessandro, S |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 16 2689

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 026 427 A (ZHONGXING COMM CO LTD [CN]) 29 August 2007 (2007-08-29) * the whole document * | 1,5-10, 12-15 | |
| A | | 2-4,11 | |

TECHNICAL FIELDS
SEARCHED        (IPC)

The present search report has been drawn up for all claims

| Place of search | Date of completion of the search | Examiner |
|---|---|---|
| The Hague | 24 June 2025 | D'Alessandro, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 2689

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| CN 101026427 A | 29-08-2007 | NONE | |

EPO FORM P0459

For more details about this annex : see Official Journal of the European Patent Office, No. 12/82

**EP 4 618 431 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007150621 A

**44**